(19) Europäisches Patentamt
European Patent Office
Office européen des brevets

(11) **EP 0 921 387 B1**

(12) **EUROPÄISCHE PATENTSCHRIFT**

(45) Veröffentlichungstag und Bekanntmachung des Hinweises auf die Patenterteilung:
**08.11.2006 Patentblatt 2006/45**

(51) Int Cl.:
**G01M 17/04** (2006.01)

(21) Anmeldenummer: **98122896.8**

(22) Anmeldetag: **02.12.1998**

(54) **Verfahren und Vorrichtung zum Prüfen von eingebauten Stossdämpfern**

Method and device for testing in situ shock absorber

Méthode et dispositif pour tester des amortisseurs montés

(84) Benannte Vertragsstaaten:
**DE FR GB IT**

(30) Priorität: **08.12.1997 DE 19754854**

(43) Veröffentlichungstag der Anmeldung:
**09.06.1999 Patentblatt 1999/23**

(73) Patentinhaber: **Beissbarth GmbH**
**80993 München (DE)**

(72) Erfinder:
• **Egle, Karl**
**84513 Töging (DE)**
• **Beaujean, Frank**
**84453 Mühldorf am Inn (DE)**

(74) Vertreter: **Kirschner, Klaus Dieter**
**advotec.**
**Böck, Tappe, Kirschner**
**Patent- und Rechtsanwälte**
**Sollner Strasse 38**
**81479 München (DE)**

(56) Entgegenhaltungen:
| | |
|---|---|
| **EP-A- 0 202 036** | **EP-A- 0 397 488** |
| **EP-A- 0 476 746** | **EP-A- 0 647 843** |
| **WO-A-96/05975** | **WO-A-96/07882** |
| **DE-C- 4 345 233** | **US-A- 4 634 142** |
| **US-A- 5 231 583** | **US-A- 5 369 974** |
| **US-A- 5 671 142** | |

**Beschreibung**

Die Erfindung betrifft ein Verfahren und eine Vorrichtung zum Prüfen von am Fahrzeug eingebauten Stoßdämpfern nach dem Oberbegriff des ersten Verfahrens beziehungsweise des ersten Vorrichtungsanspruchs.

Vorrichtungen, um den Wirkungsgrad eines Fahrwerkes eines Kraftfahrzeuges zu messen, ohne den Stoßdämpfer von den Kraftfahrzeug abbauen zu müssen, sind an sich bekannt. Es gibt verschiedene Methoden zu diesem Zweck, wobei beispielsweise eine Schwingplatte, auf der das Kraftfahrzeug mit einem Rad steht und die mit einer geeigneten Amplitude und variabler Frequenz in vertikaler Richtung hin- und herbewegt wird, verwendet wird, um Schwingungen auf das Rad auszuüben, und wobei die Messung der Kraft ausgewertet wird, die von dem Fahrwerk auf die Schwingplatte ausgeübt wird.

Nach der sogenannten EUSAMA-Methode (Vereinbarung der größten europäischen Stoßdämpferhersteller: EUropeanShockAbsorber Manufacturer Association) wird ein einheitliches Prüfverfahren für Stoßdämpfer in eingebautem Zustand definiert. Die Prüfung erfolgt dabei mit einer Schwingplatte, die mit Hilfe eines Exzenterantriebes eine Hubbewegung von genau 6 mm generiert. Bei der Prüfung wird der Messaufbau auf ca. 23 Hz erregt und läuft freischwingend auf 0 Hz aus. Die entsprechende, sinusförmige, dynamische Radlast wird von Sensoren gemessen und abgespeichert. Vor der Erregung der Schwingungen wird die statische Radlast $F_S$ gemessen. Die gespeicherten, dynamischen Radlastwerte werden nach ihrem Minimum $F_{min}$ untersucht. Aus diesen Werten wird dann die sog. relative Bodenhaftung A in Prozent berechnet: $A = F_S - F_{min}/F_S$.

In der realen Anwendung wird der Bodenhaftungswert noch korrigiert, da besonders leichte Fahrzeuge nur schlechte Bodenhaftungswerte liefern. Für die Bewertung wird dann folgende Tabelle zugrundegelegt:

| | |
|---|---|
| 100%-60% | gut |
| 59%-40% | ausreichend |
| 39%-20% | ungenügend |
| 19%-0% | schlecht |

Die EUSAMA-Methode wird weitgehend verwendet, ihre Meßergebnisse hängen jedoch nicht nur von dem Zustand des Stoßdämpfers ab, sondern auch von konstruktiven Merkmalen, die die Radaufhängung charakterisieren, beispielsweise das Verhältnis zwischen der gefederten Masse und der ungefederten Masse, dem Reifentyp, dem Reifendruck und der Art der Aufhängung sowie von den Merkmalen der Meßbedingungen, beispielsweise der Beladung des Fahrzeuges oder der Umgebungstemperatur oder der Betriebstemperatur des Stoßdämpfers. Die Abhängigkeit von einer großen Zahl von Parametern verhindert in der Praxis, daß der durch die EUSAMA-Methode definierte Wert in angemessener Weise repräsentativ für den Zustand des Stoßdämpfers selbst ist. Daher gibt die EUSAMA-Methode keine reproduzierbaren und zuverlässigen Ergebnisse.

Ähnliche Probleme haben sich bei anderen bekannten Meßsystemen für Stoßdämpfer ergeben, wo die Abhängigkeit der Messung von vielen physikalischen Parametern des Fahrwerkes dazu führt, daß die gemessenen Daten unter Verwendung von Tabellen oder dergleichen interpretieren muß. Dies führt zu groben Annäherungen und großen Fehlerbereichen, und für die verschiedenen Fahrzeugtpyen sind unterschiedliche Tabellen erforderlich, je nachdem, welche Stoßdämpfer montiert sind.

Aus der EP 0476746 A1 ist eine Vorrichtung zum Testen von Fahrwerken eines Kraftfahrzeuges bekannt, die ähnlich wie die EUSAMA-Methode mit einer Schwingplatteneinrichtung arbeitet. Ein Rechner verarbeitet die Meßwerte und bestimmt aus diesen Meßwerten eine Transferfunktion für die Radaufhängung, die als System mit einer Vielzahl von Systemelementen angesehen wird. Der Rechner errechnet aufgrund eines Modells des Systems die Werte der Systemelemente aus der Transferfunktion, und berechnet mit den berechneten Werten der Systemelemente die Werte von wenigstens einer Bemessungsvariablen und vergleicht diesen Wert mit einem gespeicherten Wert der Bemessungsvariablen. Der Rechner beurteilt die Radaufhängung aus diesem Vergleich und zeigt das Resultat dieses Vergleiches an. Auch hier sind daher entsprechende Tabellen in einer Datenbank erforderlich, die die Werte für alle gängigen Fahrzeugtypen und Bereifungen bereitstellen muß. Außerdem ist die Bewertung des Fahrwerkes über einzelne Systemvariablen ungenau.

Aus der WO 96/07882 ist eine Vorrichtung zum Prüfen von Stoßdämpfern von Kraftfahrzeugen bekannt, bei der das Rad auf einer Schwingplatte in Schwingung versetzt wird und aus den Schwingungsausschlägen bei unterschiedlichen Frequenzen entsprechende Meßergebnisse abgeleitet werden. Bei dieser Vorrichtung wird die Aufhängungsresonanz abgetastet und dann die Frequenz des Hubes und somit die zugeführte Engerie variiert. Die Dämpfungskraft des Stoßdämpfers wird über die Geschwindigkeit aufgezeichnet. Bei diesem Modell werden einige wichtige Einflüsse, beispielsweise die innere Reibung, wie sie unten noch beschrieben wird, nicht berücksichtigt.

Aus der EP 0647843 A2 ist ein System zur Messung des Dämpfungskoeffizienten eines an einem Kraftfahrzeug montierten Stoßdämpfers bekannt, wie es in dem Oberbegriff des Hauptanspruches angegeben ist. Der Dämpfungskoeffizient wird als eine Funktion der Ableitung bezüglich der Frequenz der relativen Phasenfunktion zwischen der auf die Schwingplatte übertragenen Kraft und der Bewegung der Schwingplatte berechnet. Bei dieser Vorrichtung wird von einem unzureichenden Schwingungsmodell ausgegangen, wobei der als "Achsdämpfungsgrad" bezeichnete Wert nur für das angewendete Modell gilt, so daß sich in der Praxis erhebliche Abweichungen zwischen den Ergebnissen dieser Methode und den tatsächlichen Dämpfungsgraden der gemessenen Dämpfer ergibt. Insbesondere wird der Einfluß der äußeren Reibung nicht berücksichtigt.

Die bisher existierenden Verfahren, bei denen auf eine Bewertung unter Einbindung eines Schwingungsmodells erfolgt, zeigen Mängel im theoretischen Ansatz. Dies ist beispielsweise die unkorrekte Zerlegung des einfachen Schwingungsmodells in verschiedene Teilmodelle für verschiedene charakteristische Frequenzbereiche; die unkorrekte mathematische Beschreibung der Resonanzfrequenzen. Teilweise werden Ansätze auf der Basis von freien, ungedämpften elastischen Schwingungssystemen verwendet. Grundlage sind jedoch erzwungene, stark gedämpfte elastische Schwingungssysteme; die ungültige Vereinfachung oder Vernachlässigung von Teiltermen des mathematisch beschriebenen Modells; die Vernachlässigung der äußeren Reibung innerhalb des einfachen $\frac{1}{4}$-Fahrzeugmodells; die Verletzung des linearen Kraftgesetzes durch progressive Aufhängfedern; die Verzerrung der geforderten sinusförmigen Signalform durch das unterschiedliche Druck- und Zugstufenverhalten.

Der Erfindung liegt die Aufgabe zugrunde, ein Verfahren und eine Vorrichtung zum Prüfen von am Fahrzeug eingebauten Stoßdämpfern bereitzustellen, welches aus den gemessenen Kennlinien der Kraftantwort unter Verwendung eines Schwingungsmodells für erzwungene Schwingungen reproduzierbare Messergebnisse für die Güte des Stoßdämpfers ergibt.

Zur Lösung dieser Aufgabe ist das erfindungsgemäße Verfahren dadurch gekennzeichnet, daß als Bewertungsgrundlage für die Qualität des eingebauten Stoßdämpfers der Achs-Dämpfungsgrad in Bezug auf den Quotienten der gefederten Masse zu der ungefederten Masse berechnet wird, wobei die Meßwerte des Achs-Dämpfungsgrades zu einer Kennlinie eines Grenzwertdämpfungsgrades in Beziehung gesetzt werden, die den Bereich nichtakteptabler Achs-Dämpfungsgrade begrenzt. Die Beurteilung des Stoßdämpfers erfolgt durch die Klassifizierung in die Gütebereich "sehr gut", "mittelmäßig" und "ungenügend", an die eine Austauschempfehlung für den eingebauten Dämpfer gekoppelt ist. Die Beurteilung erfolgt in Abhängigkeit von der Lage des ermittelten Achs-Dämpfungsgrades zu der Kennlinie des Grenzwert-Dämpfungsgrades und nicht in Abhängigkeit von einzelnen Parametern des $\frac{1}{4}$-Fahrwerks, d. h. der Radaufhängung eines Rades. Da die Meßsignale in der oben beschriebenen Weise aufbereitet worden sind, ergeben sich aus der Auswertung dieser Signale auch reproduzierbare, d. h. befriedigende Meßergebnisse.

Nach einer weiteren vorteilhaften Ausgestaltung des erfindungsgemäßen Verfahrens wird eine Parameterberechnung durchgeführt, wie sie in Anspruch 7 angegeben ist, und aus den Parametern wird der Achs-Dämpfungsgrad bestimmt, wobei die hierbei verwendeten Parameter ein Resultat der Modelliteration sind. In Versuchen hat sich gezeigt, daß mit diesem $\frac{1}{4}$-Fahrzeugmodell befriedigende Ergebnisse bei der Prüfung und Klassifizierung der eingebauten Stoßdämpfer erhalten werden können. Insbesondere wird der problematische Einfluß der sogenannten äußeren Reibung durch dies Modelliteration berücksichtigt.

Die vorteilhafte Ausgestaltung des erfindungsgemäßen Verfahrens nach Anspruch 8 wird der Rechenaufwand bei der Auswertung der Meßergebnisse erheblich reduziert, da die Zahl der zu berechnenden Variablen auf sechs reduziert werden kann.

Durch die vorteilhafte Ausgestaltung des erfindungsgemäßen Verfahrens nach Anspruch 14 wird der Rechenaufwand noch weiter reduziert, ohne daß die Meßergebnisse an Genauigkeit einbüßen würden.

Eine weitere vorteilhafte Ausgestaltung des erfindungsgemäßen Verfahrens ist dadurch gekennzeichnet, daß nach der Berechnung des Achs-Dämpfungsgrades und dessen Einordnung in das Diagramm von Achs-Dämpfungsgrad zum Quotienten der gefederten zu der ungefederten Masse eine Empfehlung bezüglich der Notwendigkeit eines Austausches des Stoßdämpfers gegeben wird.

Eine weitere vorteilhafte Ausgestaltung des erfindungsgemäßen Verfahrens is dadurch gekennzeichnet, daß das Meßsignal, das den zeitlichen Verlauf der Kraftantwort bei einer Zielfrequenz darstellt, durch eine Zug-Druckstufen-Trennung in ein Druckstufensignal, welches für die Druckstufe des Stoßdämpfers charakteristisch ist, und ein Zugstufensignal aufgetrennt wird, welches für die Zugstufe des Stoßdämpfers charakteristisch ist, und daß das Druckstufensignal und das Zugstufensignal getrennt der weiteren Verarbeitung zugeführt werden. Dadurch wird eine reproduzierbare Basis für die spätere Auswertung der Messungen geschaffen.

Eine weitere vorteilhafte Ausgestaltung des erfindungsgemäßen Verfahrens is dadurch gekennzeichnet, daß die Zug-Druckstufen-Trennung aufgrund einer Frequenztrennung durchgeführt wird, wobei die Grundfrequenz erhalten bleibt und die Meßwerte während der Zeitdauer $\pi/2$ der positiven Halbwelle der Druckstufe und die Meßwerte der negativen Halbwelle während der Dauer $\pi/2$ der Zugstufe zugeordnet werden.

Eine weitere vorteilhafte Ausgestaltung des erfindungsgemäßen Verfahrens is dadurch gekennzeichnet, daß die Zug-Druckstufen-Trennung aufgrund der Amplitudentrennung durchgeführt wird, wobei die höhere Grundfrequenz der Druckstufe und die niedrigere Frequenz der Zugstufe für die Berechnung der Amplitude dadurch berücksichtigt wird, daß die schmalere, positive Druckstufenhalbwelle um $\delta\varphi$ nach rechts verschoben wird, während die breitere, negative

Zugstufenhalbwelle um δφ nach links verschoben wird.

Eine weitere vorteilhafte Ausgestaltung des erfindungsgemäßen Verfahrens is dadurch gekennzeichnet, daß die durch die Frequenztrennung erhaltenen Signale einer digitalen Filterung, vorzugsweise einer Fourier-Transformation und besonders bevorzug einer Fast-Fourier-Transformation, unterworfen werden. Dadurch wird auch die Informationsverfälschung bei der bisher üblichen Filterung des gesamten Signals vermieden, und die charakteristischen Merkmale der jeweiligen Stufe (Zug- beziehungsweise Druckstufe) bleiben erhalten.

Eine vorteilhafte Ausgestaltung des erfindungsgemäßen Verfahrens ist dadurch gekennzeichnet, daß nach der digitalen Filterung eine Gütebeurteilung des verarbeiteten Signales aus Sinustreue durchgeführt wird, wobei für jeden gemessenen Wert die relative Abweichung zum Sinussignal, das den ideal gefilterten Wert darstellt, berechnet, die Quersumme aller Abweichungen gebildet und Meßpunkte verworfen werden, deren mittlere Abweichung von dem ideal gefilterten Wert einen vorgegebenen Wert, vorzugsweise 5 %, übersteigt. Dadurch kann erreicht werden, daß zwei sinusförmige Signale abgeleitet werden, die dann der weiteren Bearbeitung zugeführt werden. Nur mit Hilfe des sinusförmigen Verlaufs der Signale kann die Korrektheit des Berechnungsverfahrens bezüglich der Parameterberechnung und der Parameterschätzung garantiert werden. Ferner wird die Meßkurve geglättet, sodaß die weitere Verarbeitung erleichtert wird.

Gemäß einer weiteren vorteilhaften Ausgestaltungen des erfindungsgemäßen Verfahrens wird der Einfluß der Schwingplatte auf das Meßergebnis kompensiert, in dem bei einem dynamischen Kalibrierdurchlauf der Frequenzgang der Schwingplatte aufgenommen und das Amplitudenspektrum durch einen Parabelast interpoliert wird. Damit wird ein wichtiger Störfaktor ausgeschaltet.

Nach einer vorteilhaften Ausgestaltung des erfindungsgemäßen Verfahrens wird vor dem eigentlichen Meßlauf eine Erwärmungsphase für den Schwingungsdämpfer vorgesehen, um den Stoßdämpfer bei der Messung auf eine vorbestimmte Temperatur zu bringen und damit den Einfluß von Temperaturschwankungen auf das Meßergebnis auszuschalten.

Nach einer vorteilhaften Ausgestaltung des erfindungsgemäßen Verfahrens wird bei der Aufnahme der Stützpunkte für die Parameterschätzung ein Gütetest durchgeführt, wobei die Abweichung des tatsächlichen Signals zum geforderten, sinusförmigen Signal festgestellt wird und, wenn die Abweichung zu groß ist, wird der Meßwert verworfen und die nächste Zielfrequenz liegt dann um einen vorgegebenen Wert, beispielsweise 1 Hz, unter der aktuellen Frequenz, während, wenn die Güte des Signales ausreichend ist in kleineren Schritten, beispielsweise 0,5 Hz, weiter abgetastet wird. Damit wird die Schrittweite der Messungen automatisch an die Gegebenheiten angepaßt, was zu erheblich verbesserten Meßergebnissen führt.

Eine weitere vorteilhafte Ausgestaltung des erfindungsgemäßen Verfahrens ist dadurch gekennzeichnet, daß bei der Aufnahme des Frequenzganges folgende Schritte in der genannten Reihenfolge durchgeführt werden:

- Messung des statischen Gewichts;
- Anfahren der Startfrequenz von beispielsweise 10 Hz;
- Durchführung einer Erwärmungsphase des Stoßdämpfers;
- Hochfahren der Erregerschwingung der Schwingplatte auf die Maximalfrequenz von beispielsweise 35 Hz;
- Aufnehmen der Stützpunkte für die Parameterschätzung;
- Aufnehmen der Resonanzfrequenz $f_3$;
- Aufnehmen der $\pi/2$ Frequenz $f_2$ und
- Übersenden der Daten an die Auswertung.

Eine weitere vorteilhafte Ausgestaltung des erfindungsgemäßen Verfahrens ist dadurch gekennzeichnet, daß zum Aufnehmen der Frequenzpunkte folgende Schritte in der angegebenen Reihenfolge durchgeführt werden:

- Anfahren der Zielfrequenz;
- Überprüfung, ob die Frequenz sich stabilisiert;
- Aufnehmen der Meßwerte;
- Trennung von Zug- und Druckstufensignal;
- Digitale Filterung, vorzugsweise Fourier-Transformation, der getrennten Signale;
- Gütebewertung der Signale;
- Überprüfung der Bodenhaftung;
- Überprüfung, ob die Messungen über eine gegebene Anzahl von Umdrehungen aufgenommen worden sind;
- Überprüfung, ob die Messungen bei wenigstens einem Teil der Umdrehungen die Gütenorm erfüllen;
- Mittelwertbildung der als gut klassifizierten Messungen;
- Kompensation des Einflusses der Schwingplatte.

Eine weitere vorteilhafte Ausgestaltung des erfindungsgemäßen Verfahrens ist dadurch gekennzeichnet, daß zur Auswertung der Meßergebnisse folgende Schritte in der angegebenen Reihenfolge durchgeführt werden:

- Überprüfung, ob die Bodenhaftung innerhalb vorgegebener Toleranzgrenzen liegt;
- Extrahieren der charakteristischen Frequenzen;
- Parameterschätzung in Bezug auf die Berechnung von $k_R$, der Federkonstanten des Reifens;
- Überprüfung des Luftdrucks des Reifens;
- Überprüfung der Signalform des Amplitudenspektrums;
- Überprüfung, ob der Phasengang $\pi/2$ erreicht;
- Überprüfung, ob die Gleichung $f_2 = f_3$ gilt;
- Parameterberechnung;
- Überprüfung, ob die Parameter berechenbar sind;
- Berechnung des Achs-Dämpfungsgrades;
- Berechnung der Kennlinie der Grenzwertdämpfung; und
- Beurteilung des Achsdämpfungsgrades und Ausgabe einer Empfehlung über die Notwendigkeit des Stoßdämpferaustausches.

Die verschiedenen Ausführungsbeispiele des erfindungsgemäßen Verfahrens haben die folgenden Vorteile. Die Meßwertaufbereitung bewertet die Güte eines Meßpunktes, führt ihn der Mittelwertbildung zu und trennt die obere und untere Halbwelle in zwei sinusförmige Signale. Nach der digitalen Filterung wird dann auch noch der verfälschende Effekt der Schwingplatte auf die Scherkraftsensoren kompensiert.

Die Parameterbestimmung basiert auf einer mathematischen Modellierung des Fahrwerkes, die in ihrer Komplexität nur von einer sogenannte Computer-Algebra gelöst werden kann. Die Gleichungssysteme verfügen hierbei über mehrere hundert Einzelsummanden mit komplexen Polynomen 18. Grades. Dieses Verfahren, das auch als Parameterberechnung bekannt ist, wird noch zusätzlich mit der Parameterschätzung kombiniert.

Die Bewertung des Fahrwerkes erfolgt nicht über die isolierte Bewertung der Modell-Parameter, da für jeden Fahrzeugtyp, einschließlich seiner verschiedenen Radaufhängungsvarianten, die Übersetzungsverhältnisse und die Kennwerte der eingebauten Dämpfer und Aufhängfedern in der Datenbank gehalten werden müßten. Bei der Vielfalt von Varianten wäre eine solche Datenbank für den realen Einsatz beim Kunden nicht praktikabel. Hier lehnt man sich an die EUSAMA-Methode an, die einen zwar unbefriedigenden aber dennoch Fahrzeugtyp übergreifenden Bodenhaftungswert liefert. Der sogenannte Achs-Dämpfungsgrad, der über dem Massenverhältnis gefederte zu ungefederte Masse ausgewertet wird, soll die bekannten Nachteile des Bodenhaftungswertes aufheben. Auf der Basis dieses Bewertungspunktes wird dann eine Austauschempfehlung für den eingebauten Dämpfer generiert.

Die Vorteile dieses Verfahrens zeichnen sich insbesondere bei den modernen Achssystemen, wie beispielsweise mit Luftfederung, Raumlenkerachsen usw. ab, bei denen die klassischen Bewertungsverfahren nahezu vollständig versagen und diese Aufhängungen in der Regel negativ klassifiziert werden.

Eine Vorrichtung zur Durchführung des Verfahrens zum Prüfen von am Fahrzeug eingebauten Stoßdämpfern mit einer Schwingplatte, auf der das Kraftfahrzeug mit einem Rad steht und die mit einer geeigneten Amplitude und einer variablen Frequenz in vertikaler Richtung hin- und herbewegbar ist und eine Schwingung auf das Rad ausübt, wobei die Dämpfung des Stoßdämpfers aus der Kraftantwort des Fahrwerkes auf die Schwingungen der Schwenkplatte und der relativen Phasenfunktion zwischen der von der Schwingplatte ausgeübten Kraft in der Bewegung der Schwingplatte erhalten wird, ist gekennzeichnet durch Scherkraftsensoren an der Schwingplatte und einen Impulsgeber für die winkeläquidistanter Abtastung, und durch eine Einrichtung, durch die das Meßsignal in ein Druckstufensignal und ein Zugstufensignal aufgetrennt wird, und durch eine Einrichtung, um das Druckstufensignal und das Zugstufensignal getrennt der Einrichtung für die Weiterverarbeitung der Signale zuzuführen.

Eine vorteilhafte Ausgestaltung der erfindungsgemäßen Vorrichtung ist dadurch gekennzeichnet, daß die Auswertungs-Einrichtung die Qualität des eingebauten Stoßdämpfers über den Achs-Dämpfungsgrad im Bezug auf den Quotienten der gefederten Masse zu der ungefederten Masse beurteilt, wobei die Meßwerte des Achs-Dämpfungsgrades zu einer Kennlinie eines Grenzwert-Dämpfungsgrades in Beziehung gesetzt werden, die den Bereich nicht-akzeptabler Achs-Dämpfungsgrade begrenzt.

Die erfindungsgemäße Vorrichtung hat den Vorteil, daß die Schingungen (Vibrationen), die von der Schwingplatte erzeugt werden, echte sinusförmige Schwingungen sind, wie es erwünscht ist, um auch einen sinusförmigen Respons von dem System zu erhalten.

Weitere vorteilhafte Ausgestaltungen der Erfindung ergeben sich aus den restlichen Unteransprüchen.

Ausführungsbeispiele der Erfindung werden nun anhand der beiliegenden Zeichnungen beschrieben. Es zeigen:

Figur 1          ein Flußdiagramm der Meßwertaufnahme;
Figur 2          ein Flußdiagramm der Meßwertaufbereitung;

| | |
|---|---|
| Figuren 3A und 3B | graphische Darstellungen des Prinzipes der Frequenztrennung; |
| Figuren 4A und 4B | graphische Darstellungen des Prinzips der Amplitudentrennung; |
| Figuren 5A und 5B | ein Flußdiagramm der Auswertung gemäß des erfindungsgemäßen Verfahrens; |
| Figur 6 | eine graphische Darstellung, die die Wirkung des Haftreibungsabrisses auf den Frequenzgang darstellt; |
| Figur 7 | eine graphische Darstellung, die die Wirkung einer guten Dämpferleistung auf den Frequenzgang darstellt |
| Figur 8 | eine graphische Darstellung, die die Wirkung schlechter Dämpferleistung auf den Frequenzgang darstellt; |
| Figur 9 | eine graphische Darstellung, die die Soll-kR-Linie für die Vorkontrolle des Reifendruckes darstellt; |
| Figur 10 | eine graphische Darstellung, die die kR-Linie eines Reifens (Uniroyal 155/70 R13) darstellt; |
| Figur 11 | eine graphische Darstellung, die die Signalform eines einwandfreien Frequenzganges darstellt; |
| Figur 12 | eine graphische Darstellung, die die Signalform eines defekten Stoßdämpfers darstellt; |
| Figur 13 | eine graphische Darstellung, die die Signalform einer Aufhängung mit Spurflattern darstellt; |
| Figur 14 | den theoretischen Kurvenverlauf im mU-k-Gebiet; |
| Figur 15 | eine graphische Darstellung des praktischen Kurvenverlaufs im mU-k-Gebiet; |
| Figur 16 | eine graphische Darstellung des Scan-Bereiches der Modelliteration im mU-k-Gebiet; |
| Figur 17 | eine graphische Darstellung der Polstelle und der Asymptote der Kennlinie des Grenzwertdämpfungsgrades; |
| Figur 18 | eine graphische Darstellung der Achs-Dämpfungsgrade verschiedener Druckstufen; |
| Figur 19 | eine graphische Darstellung der Achs-Dämpfungsgrade verschiedener Zugstufen; |
| Figur 20 | eine graphische Darstellung der Druckabhängigkeit des Achs-Dämpfungsgrades vom Reifendruck; |
| Figur 21 | eine graphische Darstellung der Abhängigkeit des Achs-Dämpfungsgrades von der Beladung des Kraftfahrzeuges; |
| Figur 22 | eine graphische Darstellung der Temperaturabhängigkeit des Achs-Dämpfungsgrades von der Temperatur des Stoßdämpfers; |
| Figur 23 | eine graphische Darstellung der Abhängigkeit des Achsdämpfungsgrades von der Bereifung des Kraftfahrzeuges; |
| Figur 24 | eine graphische Darstellung der Abhängigkeit des Achsdämpfungsgrades bei veränderter ungefederten Masse mU; und |
| Figur 25 | eine graphische Darstellung der Verschiebungsrichtung der Einflußparameter auf den Bewertungspunkt. |

Das Prüfverfahren gliedert sich in zwei Hauptschritte, nämlich die Meßwertaufnahme, in der die Meßdaten aufgenommen und aufbereitet werden, und die Auswertung, bei der die aufbereiteten Daten für eine Qualitätaussage des Fahrwerkes weiter verarbeitet werden. Die Prüfeinrichtung weist eine Schwingplatte auf, an der neben Scherkraftsensoren der Schwingplatte ein Impulsgeber für die winkeläquidistante Abtastung vorgesehen ist.

Bei der Meßwertaufnahme werden das statische Gewicht und der Frequenzgang des 1/4-Fahrzeuges über eine Erregerfrequenz von 35Hz - 10Hz aufgenommen. Der Amplitudengang entspricht hierbei dem Scherkraftsensorsignal auf der Schwingplatte in Newton. Der Phasengang entspricht der Phasenverschiebung zwischen erregender Schwingung der Schwingplatte und Antwortschwingung des 1/4-Fahrzeuges in radiant. Aus dem Frequenzgang werden dann die charakteristischen Frequenzen beziehungsweise Frequenzbereiche herausgefiltert und weiterverarbeitet.

Für die nachfolgende Auswertung sind drei charakteristische Frequenzbereiche von besonderem Interesse, nämlich die Resonanzfrequenz der ungefederten Masse $f_3$ (hier erreicht der Amplitudengang das absolute Maximum), die Frequenz $f_2$ (hier beträgt der Phasengang genau 90° beziehungsweise $\pi/2$ und der Wirkanteil des Amplitudenganges wird bei dieser Frequenz gleich Null) und die oberen Frequenzen bis zur Maximalfrequenz von 35Hz. Diese Meßpunkte sind die Stützpunkte für die Parameterschätzung, mit der die Federkonstante des Reifens $k_R$ bestimmt wird.

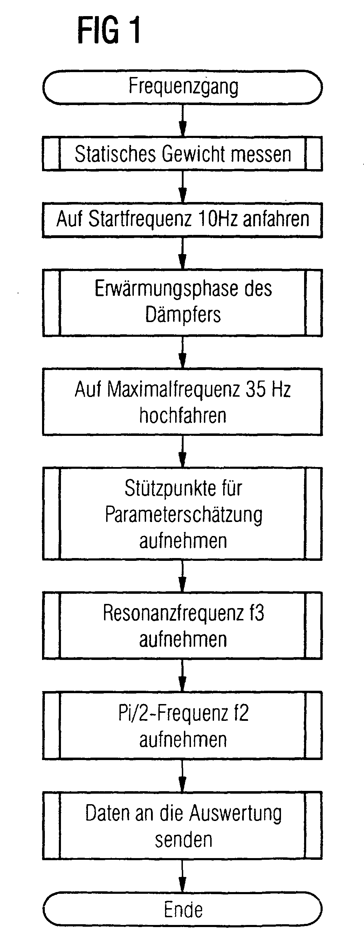

Das frequenz-äquidistante Abtasten des Frequenzbereiches von 35Hz - 10Hz ist nur eine grobe Näherung . Für hochqualitative und reproduzierbare Meßungen wird daher für jede charakteristische Frequenz beziehungsweise jeden charakteristischen Frequenzbereich ein spezieller Meßwertalgorithmus vorgesehen, dessen Ablauffolge in Figur 1 dargestellt ist.

Der Amplitudengang entspricht dem Wechselanteil des Gesamtsignals. Der Gleichanteil wird durch die digitale Filterung berücksichtigt. Das statische Gewicht des 1/4-Fahrzeuges fließt als $m_S$ in die Parameterberechnung mit ein.

Bei niedrigen Umgebungstemperaturen nimmt die Viskosität der Dämpferflüssigkeit zu und somit auch die Dämpferleistung. Die Leistungszunahmen betragen hierbei bis zu einigen 100%. Daher wird eine Erwärmungsphase vorgesehen, in der in der Umgebung der oberen Resonanzfrequenz $f_3$ die Dämpferflüssigkeit erwärmt wird. Die zunächst geringe Kraftantwort auf der Schwingplatte nimmt bei der Erwärmung zu und konvergiert gegen einen Maximalwert dessen Absolutbetrag irrelevant ist. Nach dem Erreichen eines Maximalwertes wird mit der eigentlichen Frequenzgangsmessung fortgefahren.

Bei bisherigen Versuchen von 0° Celsius betrug die Erwärmungsdauer zum Teil deutlich weniger als 15 Sekunden. Bei noch niedrigeren Temperaturen kann von Erwärmungszeiten kleiner als 30 Sekunden ausgegangen werden.

Ausgehend von der Maximalfrequenz von 35 Hz werden die Stützpunkte der Parameterschätzung gemessen. Bei den hohen Frequenzen sind auf dem Meßsignal sogenannte Prelleffekte zu erkennen, die das Meßsignal in Zug- und Druckstufenrichtung stark verfälschen. Diese Stützpunkte erhalten in der Regel für die Parameterschätzung die höchste Gewichtung und müssen korrekt sein. Bei jedem Meßpunkt wird deshalb ein Gütetest durchgeführt. Der Gütetest überprüft die Abweichung des tatsächlichen Signals zum geforderten sinusförmigen Signal. Ist die Abweichung zu groß, wird der Meßwert verworfen. Die nächste Zielfrequenz liegt dann 1 Hz unter der aktuellen Frequenz. Ist die Güte eines Signals ausreichend, so wird in 0.5 Hz-Schritten weiter abgetastet.

Zur Bestimmung der Resonanzfrequenz wird wie folgt vorgegangen. Überschreitet der Amplitutendengang in Druck- und Zugstufenrichtung sein Maximum, so ist der Resonanzpunkt $f_3$ der ungefederten Masse durchlaufen worden. Dieser Resonanzbereich wird dann noch einmal in 0.25 Hz-Schritten abgetastet. Die Resonanzfrequenz wird somit mit einer Auflösung von 0.25 Hz bestimmt. Der Algorithmus sieht auch vor, daß bei Aufhängungen mit starker Spuränderung oder Dämpfern mit defekten Ventilen mehrere Maxima sukzessive Durchlaufen werden können. In allen Problemfällen wird letztendlich die tatsächliche Resonanzfrequenz mit der geforderten Auflösung erkannt.

Alternativ zur der vorstehend beschriebenen Vorgehensweise kann zur Bestimmung der Resonanzfrequenz so vorgegangen werden, daß schon mit einem Frequenzdurchlauf die Resonanzfrequenz mit einer Auflösung von 0,25 Hz aufgenommen wird. Dazu kann, wenn der Amplitudengang seinen Wendepunkt überschreitet, der dann angenommene Resonanzbereich in kleineren Frequenzschritten, beipielsweise in 0,25 Hz-Schritten, abgetastet werdern, um in einem Druchgang die tatsächliche Resonanzfrequenz mit der geforderten Auflösung zu bestimmen.

Der Phasengang kann bei sehr starken Dämpfungen das $\pi/2$-Niveau nicht erreichen oder, im anderen Extremfall bei sehr schwachen Dämpfungen das $\pi/2$-Niveau sehr steil durchlaufen. Für beide Fälle muß der Aufahmealgorithmus funktionieren. Die $\pi/2$-Frequenz muß immer unterhalb der Resonanzfrequenz $f_3$ liegen. Wären beide Frequenzen gleich groß, so wäre das schwingende System ungedämpft. Der Phasengang nimmt mit fallender Erregerfrequenz zu. Wird der Phasenwert von 1.2 radiant erreicht so wird die Schrittweite der Abtastung auf 0.25 Hz reduziert. Erreicht der Phasenwert 1.4 radiant, so wird die Schrittweite auf 0.1 Hz reduziert. Aus diesen Stützpunkten wird dann die Resonanzfrequenz $f_3$ bestimmt.

Bei der der Meßwertaufnahme und Meßwertaufbereitung einer einzelnen Erregerfrequenz wird neben der Bewertung der Spektralverläufe auch der gemessene Kraftwert weiter verarbeitet. Die Auswertung basiert auf den komplexen Frequenzgängen erzwungener, gedämpfter, elastischer Schwingungssysteme. Dies impliziert streng sinusförmige Schwingungen. Der zeitliche Verlauf des Meßsignals ist jedoch in der Praxis nicht sinusförmig. Zum einen sind die Elongationen in Druck- und Zugstufenrichtung wesentlich unterschiedlich und zum anderen ist die Zeitdauer des Druckstufenhubes geringfügig kürzer als die des Zugstufenhubes.

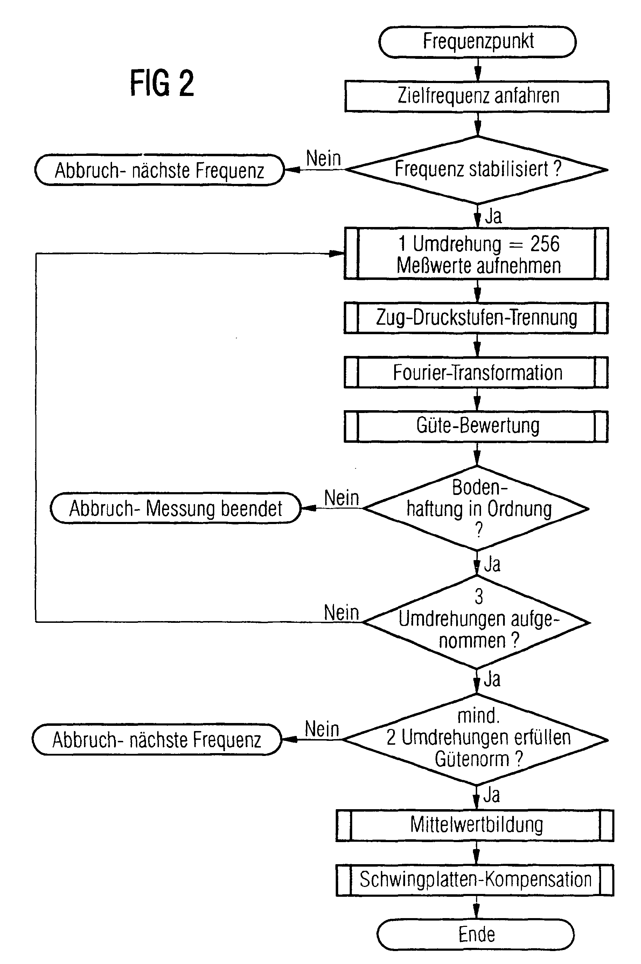

In der Figur 2 ist nun der Ablauf der Meßwertaufnahme und -aufbereitung dargestellt um eine optimale Genauigkeit zu erreichen und der Berechnung die physikalisch korrekte Information zu übergeben.

Um die nächste Zielfrequenz anzufahren und zu stabilisieren, wird dem Frequenzumrichter der Frequenzwert des nächsten Abtastpunktes des Frequenzspektrums übergeben. Die Meßwertaufnahme wird erst freigegeben, wenn der Zielpunkt erreicht ist und das System sich dort stabilisiert hat. Ein Frequenzpunkt gilt als stabilisiert, wenn seine Frequenzschwankungen eine vorgegebene Toleranz nicht mehr überschreiten. Hierbei werden die unterschiedlichen Frequenzbereiche unterschiedlich bewertet. Beim Hochfahren an die Maximalfrequenz wirken die Einschwingeffekte am deutlichsten und haben die negativsten Folgen für die Qualität der Stützpunkte und somit für die Parameterschätzung. Dort sind längere Stabilisierungszeiten vorzusehen. Bei niedrigeren Frequenzen kann das Fahrzeug in den Bereich des Haftreibungsabrisses fallen. Dort hält die Haftreibung der Aufhängungsteile der Beschleunigung durch die Schwingplatte stand und reißt dann, ab einer bestimmten Beschleunigung abrupt ab. Das Fahrzeug sackt in seine Aufhängung. Die Drehzahlregelung ist bei starken Abrißeffekten nicht in der Lage diese Störgröße ausreichend auszuregeln. Frequenzpunkte, die sich nicht stabilisieren lassen werden bei der Messung übersprungen. Die Analog-Digital-Wandlungen werden hierbei winkeläquidistant über einen Interrupt ausgelöst.

Um die physikalisch korrekten Informationen an die anschließende Berechnung liefern zu können wird das Gesamtsignal in zwei unabhängige Teilsignale für die Druck- und Zugstufe zerlegt, und es werden zwei unterschiedliche Trennungsalgorithmen angewendet.

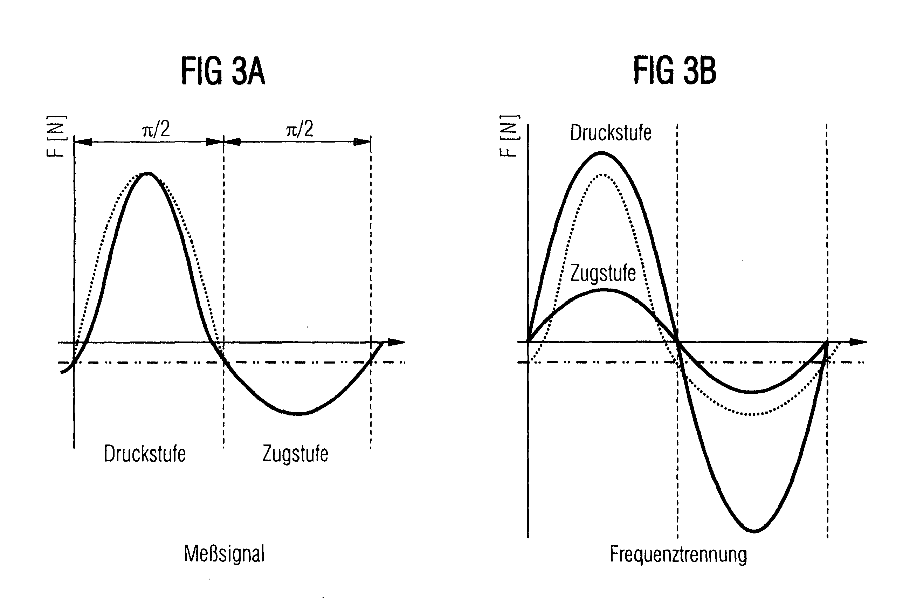

Die Grundidee dieser Trennung ist die Zuordnung von jeweils der Hälfte der Meßwerten zum Druck- beziehungsweise Zugstufensignal. Bei dieser Trennung erfolgt eine exakte Erhaltung der erregenden Grundfrequenz, und die Trennung ist relativ einfach und schnell zu implementieren. Bei dieser Art der Trennung wird das Druckstufensignal überhöht und das Zugstufensignal wird noch mehr minimiert (siehe Figuren 3A und 3B). Die unterschiedlichen Dämpferleistungen beider Stufen werden noch mehr gespreizt. Zum anderen sind die entstehenden Phasenverschiebungen nicht plausibel. Simulationen am einfachen 1/4-Fahrzeugmodell ergeben bei hohen Dämpfungsleistungen eine kleine Phasenverschiebung und bei niedrigen Dämpfungsleistungen eine große Phasenverschiebung. Bei dieser Art der Stufentrennung sind jedoch die Phasenverschiebungen nahezu identisch.

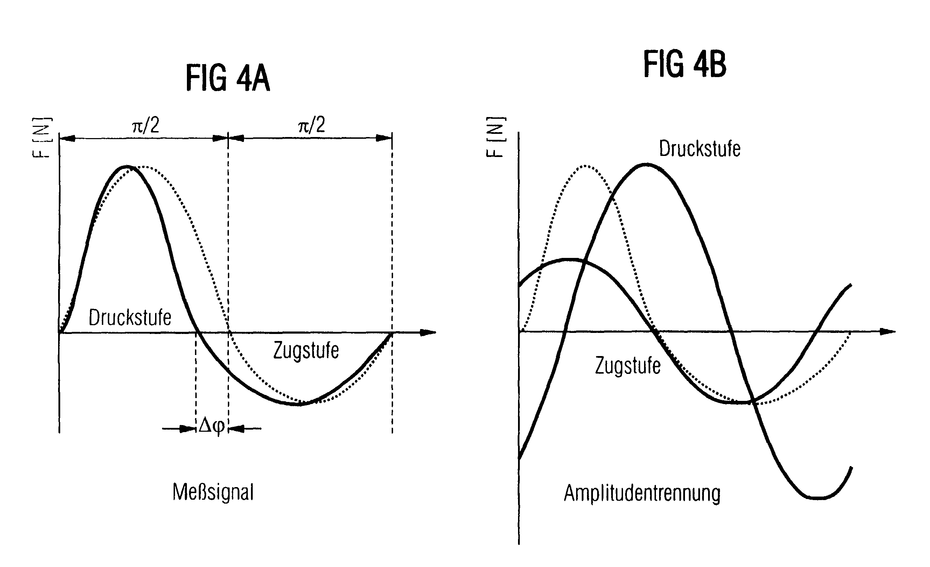

Die Grundidee der Amplitudentrennung ist die Zuordnung der positiven Halbwelle als Druckstufensignal und die Zuordnung der negativen Halbwelle als Zugstufensignal. Dies entspricht in etwa der Zuordnung bei Stoßdämpfertests im ausgebauten Zustand. Eine Spreizung der Druck- und Zugstufenamplitude findet hier nicht statt (siehe Figuren 4A und 4B).

Bei der sich einstellenden Schwingfrequenz der beiden Stufen liegt die Druckstufe deutlich über der Erregerfrequenz, während die Zugstufe deutlich unterhalb der Erregerfrequenz liegt. Dies kann jedoch durch eine Phasenverschiebung ausgeglichen werden, die mit den theoretischen Simulationen im Einklang ist. Die schmale positive Druckstufenhalbwelle muß um $\Delta\varphi$ nach rechts geschoben werden ('sie muß voreilen'), um die Grundfrequenz des Erregersignals zu erreichen. Dies entspricht einer Phasenverschiebung von $-\Delta\varphi$. Die breite negative Zugstufenhalbwelle muß um $\Delta\varphi$ nach links geschoben werden ('sie muß nacheilen'), um die Grundfrequenz des Erregersignals zu erreichen. Dies entspricht einer Phasenverschiebung von $+\Delta\varphi$.

Mit der digitalen Filterung wird das Signal der erregenden Frequenz herausgefiltert. Die digitale Filterung muß hierbei an das entsprechenden Druck-Zugstufen-Trennungsverfahren angepaßt werden, wobei bei der Frequenztrennung die klassische Form der Fourier-Transformation verwendet werden kann, da die Druck- und Zugstufenanteile genau der zu Grunde liegenden Erregerfrequenz entsprechen. Bei der Amplitudentrennung muß die höhere Grundfrequenz der Druckstufe und die niedrigere Frequenz der Zugstufe für die Berechnung der Amplitude berücksichtigt werden. Hierzu kann die Fouriertransformation des Gesamtsignals durchgeführt werden, und die oben erwähnten Phasenverschiebungen werden addiert.

Die Signalverläufe können aus den verschiedensten Gründen stark gestört sein. Selbst die digitale Filterung beispielsweise durch die Fourier-Transformation liefert dann keine brauchbaren Werte, da das Originalsignal sehr stark vom sinusförmigen Verlauf differiert. Diese Meßpunkte dürfen dann nicht weiter verarbeitet werden.

Zur Gütebeurteilung wird für jeden gemessenen Wert die relative Abweichung zum ideal gefilterten Wert (Sinuskurve) berechnet. Die Quersumme aller Abweichungen wird dann für eine Bewertung herangezogen. Untersuchungen haben ergeben, daß ab einem Grenzwert von 6% mittlerer Abweichung die Störungen im Gegensatz zu 4% oder 5% deutlich und sichtbar in einem nicht mehr vertretbaren Maße zunehmen.

Alternativ kann zur Gütebeurteilung die Differenzfläche von der gefilterten Kurve (Sinuskurve) und der Ist-Kurve aufaddiert und mit der Soll-Fläche in Relation gesetzt werde, wobei nur eine Division erforderlich ist.

Bei sehr schlechten Fahrwerken beziehungsweise Dämpferleistungen kann in der Frequenzumgebung des Resonanzpunktes $f_3$ das Fahrzeug den Kontakt zur Schwingplatte verlieren und sogar vom Prüfstand abheben.

Bei einer Bodenhaftung kleiner als 10% wird die Meßwertaufnahme aus Sicherheitsgründen abgebrochen. Eine Auswertung der bis dahin aufgenommenen Meßwerte ist nicht mehr notwendig weil das Fahrwerk ad hoc als ungenügend klassifiziert werden kann.

Für jeden Meßpunkt werden drei komplette Umläufe gemessen. Erfüllen mindestens zwei Umläufe das Gütekriterium, so wird über die qualitativ hochwertigen Meßkurven der Mittelwert für die Amplitude und die Phase gebildet. Erfüllt nur ein oder sogar kein Umlauf das Gütekriterium, so wird dieser Frequenzpunkt nicht in das Spektrum aufgenommen.

Auf den Scherkraftsensoren ist die sogenannte Schwingplatte montiert. Wird das System erregt, so wirkt auch die schwingende Masse der Schwingplatte auf die Scherkraftsensoren. Dieser Einfluß nimmt quadratisch mit steigender Erregerfrequenz zu:

$$F = m_{Platte} \cdot s_{Hub} \cdot \omega^2$$

Bei der Messung des Frequenzganges der Schwingplatte waren jedoch noch lineare und konstante Anteile im Amplitudengang enthalten. Um dieses Fehlerpotential zu minimieren wird in einem sogenannte 'dynamischen' Kalibrierdurchlauf der Frequenzgang der Schwingplatte aufgenommen und das Amplitudenspektrum durch einen Parabelast interpoliert. Die drei Koeffizienten des Interpolations-Polynoms müssen hierbei permanent gespeichert bleiben. Die Phasenverschiebung ist, bis auf die geringfügigen Verschiebungseffekte des Tiefpaß-Filters konstant, und wird als Nulldurchgangsreferenz der Schwingplatte bei der späteren Bestimmung der Phasenverschiebung verwendet.

Bei der Schwingplatten-Kompensation muß nun das gefilterte Signal um die Nulldurchgangsreferenz korrigiert werden. Konkret wird sie 'nach links geschoben', das heißt die gemessene Phasenverschiebung wird mit der Nulldurchgangsreferenz addiert. Nun ist die Phasenverschiebung korrekt zum Nulldurchgangspunkt der Schwingplatte bestimmt.

Das Amplitudenspektrum der Schwingplatte besteht nur aus Wirkanteilen und nicht aus sogenannte Blind- oder Imaginäranteilen! Um den verfälschenden Effekt der Schwingplatte zu eliminieren muß dieser Realanteil vom Realanteil des gemessenen Amplitudenspektrums subtrahiert werden.

Aus dem resultierenden Wirk- und Blindanteil des kompensierten Signals wird der tatsächliche, sogenannte kompensierte Betrags- und Phasenwert des schwingenden 1/4-Fahrzeuges berechnet.

Ziel der Auswertung ist eine qualitative Aussage über das vermessene Fahrwerk. Insbesondere soll die Qualität des eingebauten Dämpfers beurteilt werden. In Verbindung mit dieser Qualitätsaussage wird eine, für den Betreiber der Prüfanlage relevante, Austauschempfehlung für den Dämpfer gegeben. Folgende drei Empfehlungen sind vorgesehen:

Dämpfer ist sicher in Ordnung (Kein Austausch notwendig).
Der Dämpfer befindet sich im Grenzbereich (Austausch empfohlen)
Der Dämpfer ist sicher defekt (Austausch unbedingt durchführen).

Bewertungsgrundlage ist der sogenannte Achs-Dämpfungsgrad. Dieser Achs-Dämpfungsgrad wird dann in Relation zu einem Grenzwertdämpfungsgrad gesetzt, der die besonderen Fahrwerkseigenschaften und Testbedingungen berücksichtigt. Insbesondere eventuelle Manipulationsversuche werden über diesen Grenzwertdämpfungsgrad ausgeglichen. Die Manipilationsmöglichkeiten sind im Folgenden beschrieben. Der Grenzwertdämpfungsgrad läßt sich unterschiedlich restriktiv definieren und wird letztendlich in einem Feldversuch in Abstimmung mit den Fahrzeugherstellern empirisch bestimmt. Die Kennlinie des Grenzwertdämpfungsgrades wird durch nur zwei konkrete Parameter definiert. Diese sind dann für alle Fahrzeugtypen und alle Testbedingungen gültig.

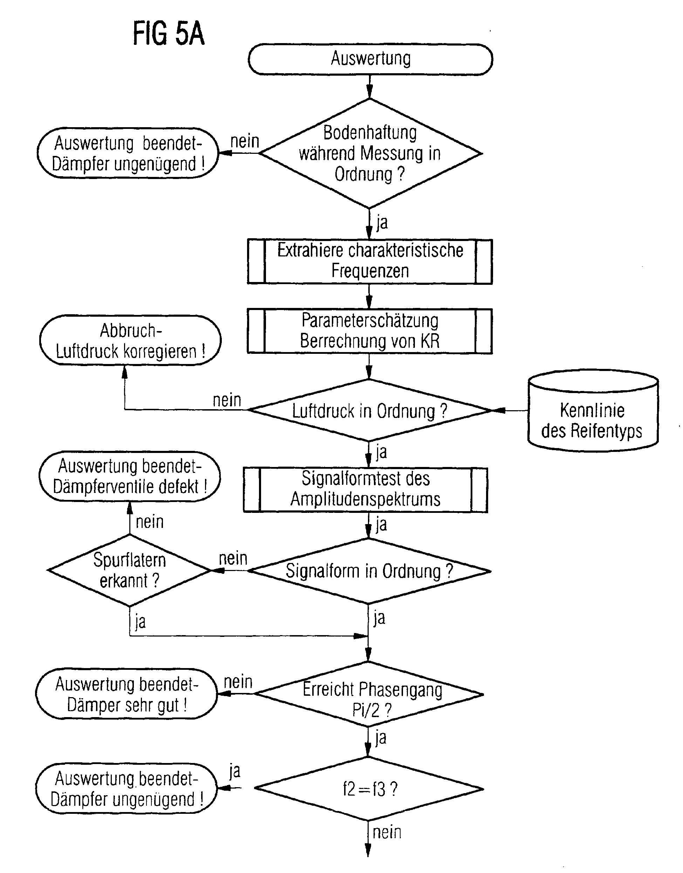

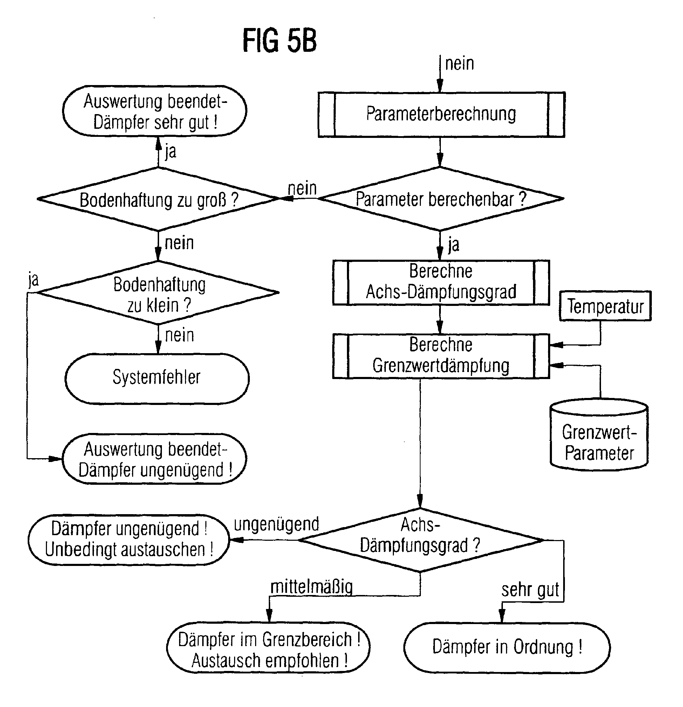

Die Auswertung basiert auf einer Vielzahl von komplexen Einzelschritten, die in dem Flußdiagramm der Figur 5 dargestellt sind. Ein Merkmal des Auswerteverfahrens ist ein Plausibilitätstest, der der Berechnung und Bewertung des Dämpfungsgrades vorausgeht. Dieser Plausibilitätstest hat die Aufgabe eventuell nicht berechenbare, extreme Fahrwerkssituationen zu eliminieren. Den nicht berechenbaren, extremem Fahrwerken liegen nicht notwendigerweise schlechte oder defekte Dämpfer zugrunde. Auch extrem gute Dämpferleistungen, die eventuell noch mit einem großen Anteil an äußerer Reibung verstärkt werden, verletzen die Annahme des zu Grunde liegenden einfachen 1/4-Fahrzeug-Modells der Parameterberechnung.

Die charakteristischen Frequenzen werden für die Zug- und Druckstufe getrennt aus dem gemessenen Amplituden- und Phasenspektrum extrahiert. Ist eine Stufe defekt, dann muß der Dämpfer gewechselt werden.

Die Resonanzfrequenz $f_3$ entspricht der Frequenz, bei der das Amplitudenmaximum durchlaufen wird. Dieses Extremum muß lokal und global sein. Ist beispielsweise der erste Wert bei 35 Hz ein globaler Maximumswert wo wird dieser nicht als lokaler akzeptiert und die Meßreihe wird als ungültig verworfen.

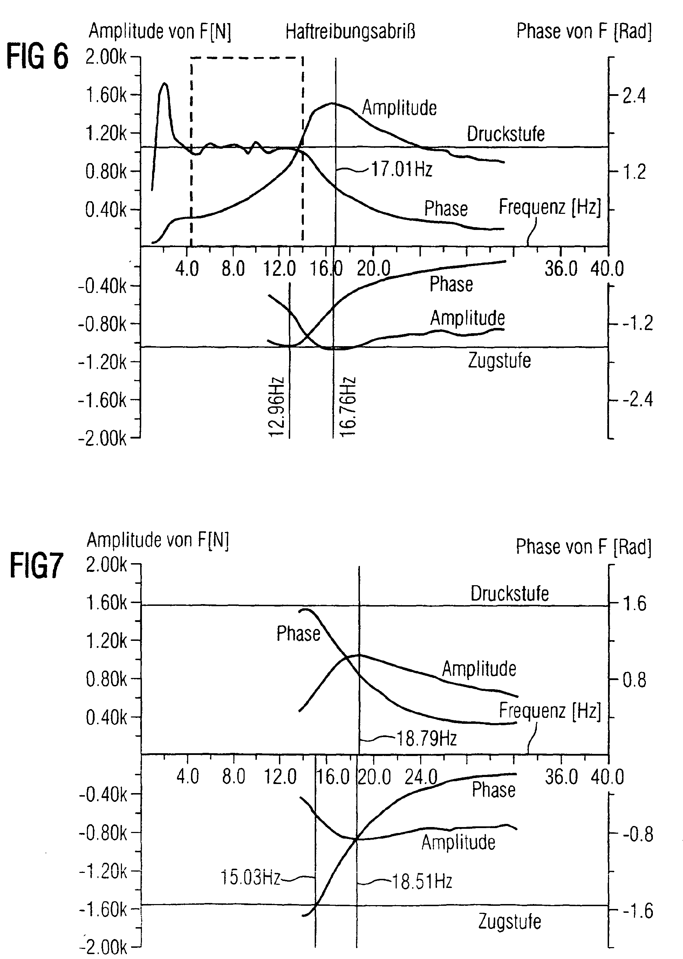

Folgende Probleme erschweren die genaue Bestimmung der $\pi/2$-Frequenz. Bei der Aufnahme der Spektren wird in frequenz-äquidistanten Schritten abgetastet. In der Regel wird dabei nicht genau der Frequenzpunkt erreicht, bei dem sich eine kompensierte Phasenverschiebung von genau $\pi/2$ einstellt. Der schon oben mehrmals erwähnte Haftreibungsabriß, der sich nach dem Durchlaufen der oberen Resonanzfrequenz einstellt verfälscht insbesondere das Phasenspektrum. Der stetig verlaufende Phasenverlauf erhält durch den Haftreibungsabriß Ausreißerwerte, die über dem $\pi/2$-Niveau liegen können, obwohl durch die vorhandene gute Dämpfung die $\pi/2$-Resonanz viel später oder gar nicht erreicht würde, wie in Figur 6 gezeigt ist.

Ebenso kann ein sicheres Erreichen des $\pi/2$-Niveaus durch einen Ausreißer verhindert werden. Durch die Interpolation des Kurvenabschnittes des Phasenverlaufes durch ein Polynom 3.Grades, werden sowohl die Ausreißer eliminiert, als auch die exakte $\pi/2$-Frequenz $f_2$ berechnet. Die Stützpunkte für die Interpolation beginnen hierbei ab der Resonanzfrequenz und enden beim lokalen Maximum des Phasenganges. Die Wirkung einer guten Dämpferleistung auf den Frequenzgang ist in Figur 7 dargestellt.

Die Frequenzen $f_2$ und $f_3$ können nun für einen Plausibilitätstest herangezogen werden. Hierbei sollen zwei Extremfälle vor der eigentlichen Parameterberechnung abgefangen werden.

Wenn die $\pi/2$-Frequenz nicht vorhanden ist, wurde das $\pi/2$-Niveau nicht erreicht. Die Dämpfung des Fahrwerkes ist außergewöhnlich gut. Eine Parameterberechnung wäre nicht möglich und erübrigt sich.

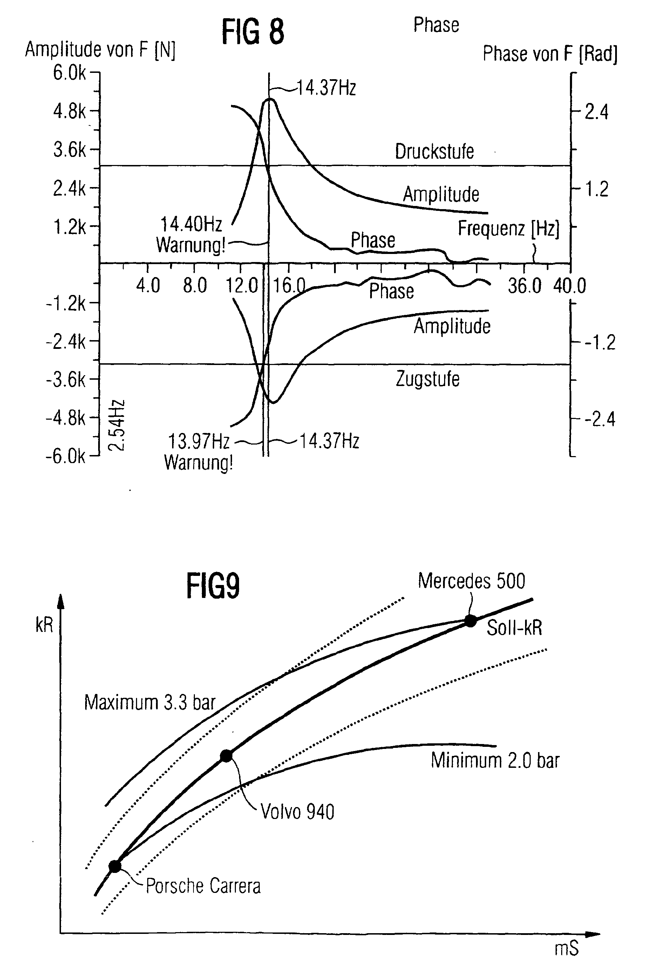

Wenn die $\pi/2$-Frequenz $f_2$ größer oder gleich der Resonanzfrequenz $f_3$ ist, sind in schwingenden Systemen ohne Dämpfung die Frequenzen $f_2$ und $f_3$ theoretisch gleich. Stellt sich dieses Verhalten bei der Aufnahme des Frequenzganges ein, so die Dämpfung des Fahrwerkes außergewöhnlich schlecht. Eine Parameterberechnung wäre nicht möglich und erübrigt sich. Die Wirkung einer schlechten Dämpferleistung auf den Frequenzgang ist in Figur 8 dargestellt.

Beide Extremfälle können über eine geeignete Manipulation des Luftdruckes provoziert werden. Die Luftdruckkontrolle muß vor dem Plausibilitätstest der charakteristischen Frequenzen durchlaufen werden.

Die Parameterschätzung ist ein Verfahren, das auf der Basis von gemessenen Stützpunkten die Parameter eines vorgegebenen komplexen Frequenzganges schätzt. Der komplexe Frequenzgang basiert auf dem einfachen 1/4-Fahrzeug-Modell:

$$G = \frac{b_0 + ib_1\omega - b_2\omega^2 - ib_3\omega^3 + b_4\omega^4}{1 + ia_1\omega - a_2\omega^2 - ia_3\omega^3 + a_4\omega^4}$$

beziehungsweise mit den realen Parametern:

$$F_P = \frac{-m_S\omega^2 - im_S\frac{d}{k}\omega^3 + \frac{m_U \cdot m_F}{k}\omega^4}{1 + i\frac{d}{k}\omega - (\frac{m_F}{k} + \frac{m_F}{k_R} + \frac{m_t}{k_R})\omega^2 - im_S\frac{d}{k\cdot k_R}\omega^3 + \frac{m_U \cdot m_F}{k\cdot k_R}\omega^4}$$

wobei

$m_F$     gefederte Masse [kg]
$m_U$     ungefederte Masse [kg]
$m_S$     statische Gesamtmasse [kg]
$k$     Federkonstante der Aufhängfeder [N/m]
$k_R$     Federkonstante des Reifens [N/m]
$d$     Dämpfungskonstante des Dämpfers [kg/s]
$\omega$     Kreisfrequenz der Erregerschwingung [1/s]

Grundlage des zu lösenden linearen Gleichungssystems ist eine Verlustfunktion V, die die Abweichung aller Stützpunkte für den zu schätzenden komplexen Frequenzgang berechnet:

$$V = \sum_{\nu=0}^{N} \psi_\nu [R_\nu(1 - a_2\omega^2 + a_4\omega^4) - I_\nu(a_1\omega - a_3\omega^3) - (b_0 - b_2\omega^2 + b_4\omega^4)]^2$$

$$+ \psi_\nu [R_\nu(a_1\omega - a_3\omega^3) + I_\nu(1 - a_2\omega^2 + a_4\omega^4) - (b_1\omega - b_3\omega^3)]^2$$

wobei

$R_\nu$     gemessener Realanteil des Stützpunktes $\nu$
$I_\nu$     gemessener Imaginäranteil des Stützpunktes $\nu$
$\Psi_\nu$     Gewichtsfunktion des Stützpunktes $\nu$
$N$     Anzahl der Stützpunkte - 1

Diese Verlustfunktion wird nach jedem zu schätzenden Koeffizienten differenziert und Null gesetzt. Das heißt, jeder Koeffizient soll so geschätzt werden, daß der entstehende Verlust ein Minimum durchläuft.

Für neun zu bestimmende Koeffizienten entstehen somit neun lineare Gleichungen, die in einem linearen Gleichungssystem verknüpft werden. Die Koeffizienten $a_1$- $b_5$ werden durch die Lösung dieses Gleichungssystem bestimmt. Die Anwendung dieses Verfahrens ist sehr komlex und ist deshalb zur Parameterbestimmung nicht besonders geeignet. Die absoluten Werte der einzelnen Parameter des Frequenzganges des einfachen ¼-Fahrzeug-Modells differieren sehr stark. Darunter leidet die Genauigkeit der einzelnen Parameter. Die Parameter $b_0$ und $b_1$ sind beim Frequenzgang des einfachen ¼-Fahrzeug-Modells immer Null. Das Parameterschätzverfahren füllt diese Parameter aber zuerst auf und gleicht die Abweichungen mit den höheren Koeffizienten wieder aus. Jeder Stützpunkt wird mit der Funktion $\Psi_\nu$ gewichtet. Das heißt, sein Einfluß auf die Verlustfunktion wird festgelegt. Hierbei ist nicht der Absolutbetrag sondern das Verhältnis der Gewichtsfunktionen der Stützpunkte untereinander relevant. Durch geeignete Definition der Gewichtsfunktion kann die Bandbreite der Lösungen nahezu beliebig variiert werden. Eine eindeutige, optimale und für alle Meßkurven gültige Gewichtsfunktion existiert nicht.

Die Besonderheit des Frequenzganges des einfachen ¼-Fahrzeug-Modells ist der konvergente Verlauf des Amplitudenspektrums gegen die Federkonstante des Reifens $k_R$ bei großen Frequenzen. Diese Asymptote läßt sich nun durch eine modifizierte Form des Parameterschätzverfahrens berechnen. Von den ursprünglich neun zu schätzenden Parametern sind die Parameter $b_0$ und $b_1$ grundsätzlich Null und der Parameter $b_2$ ist die, ebenfalls bekannte statische Masse $m_S$. Das lineare Gleichungssystem reduziert sich somit auf sechs lineare Gleichungen. Bei der Schätzung werden 20 unterschiedliche Gewichtsfunktionen durchlaufen. Für jede Gewichtsfunktion werden dann die theoretischen Stützpunkte berechnet. Die Gewichtsfunktion mit der geringsten mittleren Abweichung in den verwendeten Stützpunkten wird dann verwendet.

Zur Verifikation der geschätzten Federkonstanten-Werte der Reifen $k_R$ wurden die Frequenzgänge des Reifens unter verschiedenen Vorspannungen aufgenommen. Drei Resultate ließen sich aus diesen Messungen ableiten:

Die Federkonstante ist über den gesamten Frequenzbereich von 35Hz bis 1Hz konstant.

Der Wert der Federkonstante stimmt mit dem geschätzten Wert mit einer Genauigkeit von 2% überein.

Die typischen $k_R$-Kennlinien eines Reifens hängen primär ab von dem Reifenluftdruck, der Reifendimension und der Vorspannung, das heißt dem Gewicht, mit dem der Reifen an den Boden gepreßt wird. Nur sekundär sind die herstellerspezifischen Eigenschaften wie Gummimischung, Karkasse oder Profil. Auch die verwendete Felge hat keinen signifikanten Einfluß auf die Federkonstante $k_R$.

Die Federkonstante $k_R$ entspricht dem Kopplungsgrad zwischen der Schwingplatte und dem schwingenden Feder-Dämpfer-System der ungefederten Masse $m_U$. Ist der Kopplungsgrad zu hoch, so wird dem Feder-Dämpfer-System viel Schwingungsenergie zugeführt. Die Energieüberschuß wird dann als mangelnde Dämpferleistung interpretiert. Ist der Kopplungsgrad zu niedrig, so wird dem Feder-Dämpfer-System zuwenig Schwingungsenergie zugeführt. Dieses Energiedefizit wird dann der Dämpferleistung zugeschrieben.

Wie unten aufgeführt, wird diese Fehlbeurteilung bei kleinen Luftdruckabweichungen bezüglich der Dämpferbewertung im Gegensatz zu anderen Methoden mit dem Achs-Dämpfungsgrad gut ausgeglichen.

Die Federkonstante des Reifens $k_R$ eignet sich zur Überprüfung des Reifenluftdruckes. Grundlage des Plausibilitätstest ist die Dimensionsangabe des verwendeten Reifentypen (beispielsweise 225/50 R16). Die Soll-Luftdrücke für einen bestimmten Dimensionstypen variieren beim Einsatz dieses Reifens in verschiedenen Fahrzeugtypen nur unwesentlich und ist dann zumeist mit dem Fahrzeuggewicht gekoppelt. Schwere Automobile implizieren hierbei einen höheren Soll-Luftdruck als leichte Fahrzeuge (Bridgestone - Ratgeber Reifen 1992).

| 225/50 R16 | Soll-Luftdruck VA (bar) | Soll-Luftdruck HA (bar) |
|---|---|---|
| Mercedes 500 | 3,0 | 3,3 |
| Volvo 940 | 2,3 | 2,6 |
| Porsche Carrera | 2,0 | 2,5 |

Für den oben angegebenen Reifentypen 225/50R16 wäre nun eine Minimum-Kurve für den minimalen Wert von 2.0 bar (für Vorderachse Porsche Carrera) und eine Maximum-Kurve für den maximalen Wert von 3.3 bar (für Hinterachse Mercedes 500) in einer Datenbank abgespeichert. Beide Kurven stellen den Verlauf des Federkonstantenwertes über das Vorspanngewicht dar (Figur 9). Die beiden extremen Arbeitspunkte werden nun durch die Soll-$k_R$-Kurve miteinander verbunden. Alle anderen Fahrzeugtypen, die mit dieser Bereifung ausgestattet sind, liegen dann mehr oder weniger auf dieser Soll-$k_R$-Kurve. Für eine feste Vorspannung verhält sich die Luftdruckänderung linear zur Änderung der Federkonstante $k_R$. Somit kann dann ein Toleranzband von beispielsweise 0.5 bar definiert werden. Liegt der geschätzte $k_R$-Wert außerhalb der vorgegebenen Toleranzbandes, so wird die Messung nicht ausgewertet. Eine Aufforderung zur Überprüfung des Luftdruckes wird mit ausgegeben.

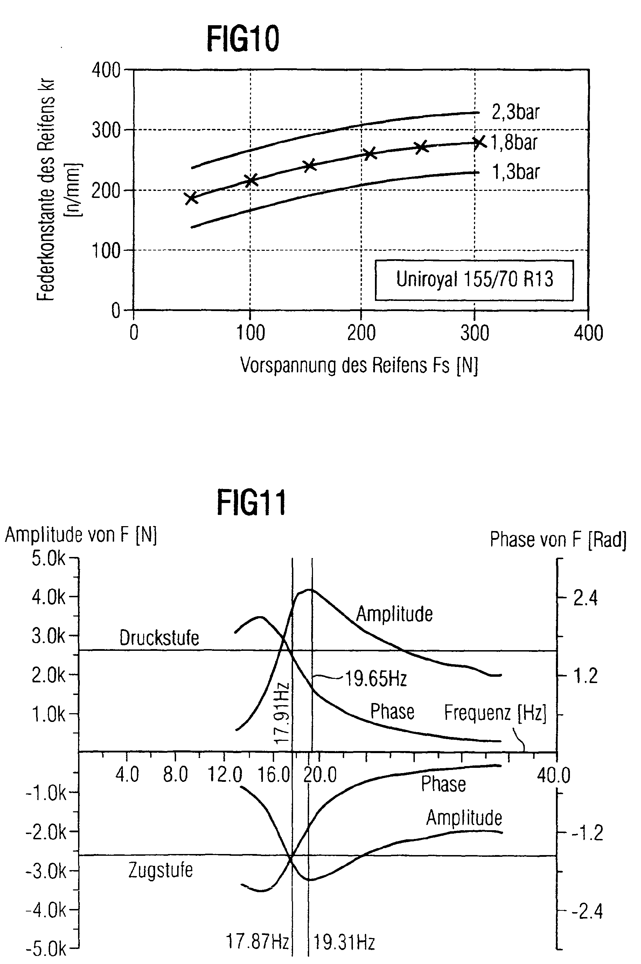

Figur 10 zeigt die Meßergebnisse des Reifentyps 155/70 R13 von Uniroyal am Reifenprüfstand. Bei Meßreihen mit dem Ford Escort wurde die Beladung und der Luftdruck variiert. Die Plausiblitätstests ergaben keine Fehlbestimmungen.

Versuche, über die Beladung das Endergebnis zu manipulieren werden durch diesen Plausibilitätstest erschwert. Es kann eindeutig zugeordnet werden, ob ein erhöhter Kopplungsgrad durch zu hohen Luftdruck oder zu hohe Beladung erzwungen wurde. Ein höheres Gewicht impliziert eine höhere Vorspannung und somit einen höheren Kopplungsgrad bei unverändertem Luftdruck des Reifens.

Der Ist-Verlauf des Amplituden- und des Phasenspektrums entspricht weitgehend dem theoretischen Soll-Verlauf des einfachen ¼-Fahrzeug-Modells. Nur im Frequenzbereich des Haftreibungsabrisses kann das einfache ¼-Fahrzeug-Modell nicht angewendet werden. Da aber beim Erreichen des Haftreibungsabrisses die Messung in jedem Fall beendet wird, kann diese vernachlässigt werden. Jede andere Abweichung des Spektrums basiert entweder auf einem defekten Fahrwerk oder einer außergewöhnlichen Fahrwerkseigenschaft. Der sogenannte Signalformtest soll Unregelmäßigkeiten des Amplitudenspektrums klassifizieren.

In der Figur 11 ist ein einwandfreies Amplituden- und Phasenspektrum dargestellt. Im Resonanzpunkt durchläuft der Amplitudengang stetig und eindeutig sein Maximum. Der Phasengang konvergiert stetig mit steigender Errregerfrequenz gegen Null.

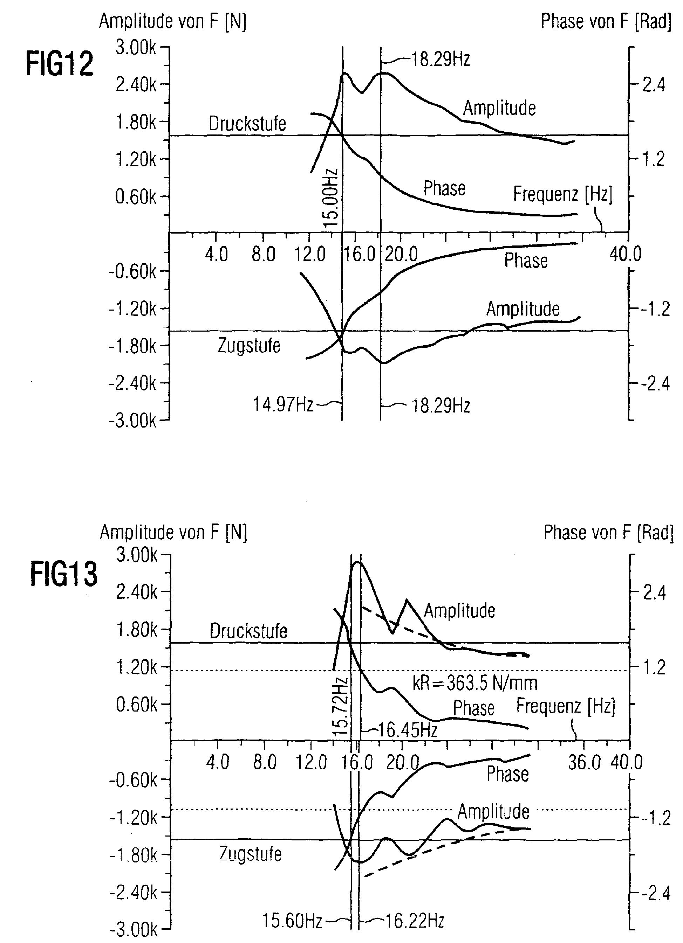

In der Figur 12 sind die Spektren eines manipulierten Dämpfers dargestellt. Das Resonanzmaximum des Amplitdenspektrums ist nicht eindeutig. Das Phasenspektrum ist in diesem Bereich nahezu ungestört. Dies führt zu einer Spreizung der fehlbestimmten charakteristischen Frequenzen $f_2$ und $f_3$. Der resultierende Achs-Dämpfungsgrad liegt dann deutlich über dem Grenzwert oder außerhalb des berechenbaren Wertebereiches. Dieser Fall darf nicht mehr der Berechnung zugeführt werden.

Aufgrund eines Sturzwinkels durchlaufen einige Fahrwerke mehrere Resonanzpunkte in denen das Fahrzeug starke horizontale Schwingungen ausführt. Ein solches Spektrum ist in der Figur 13 dargestellt. In diesen Fällen könnte dieses sogenannte Spurflattern auch als defekter Dämpfer interpretiert werden. Der Unterschied zum Amplitudenverlauf eines mechanisch defekten Dämpfers liegt jedoch in der Tatsache, daß zwischen den charakteristischen Frequenzen $f_2$ und $f_3$ kein lokales Minimum durchlaufen wird. Solche Meßreihen werden zur weiteren Parameterberechnung freigegeben.

Die Parameterberechnung basiert auf dem komplexen Frequenzgang des einfachen ¼-Fahrzeug-Modells:

$$F_P = \frac{- m_S \omega^2 - i m_S \frac{d}{k} \omega^3 + \frac{m_U \cdot m_F}{k} \omega^4}{1 + i \frac{d}{k} \omega - (\frac{m_F}{k} + \frac{m_F}{k_R} + \frac{m_U}{k_R}) \omega^2 - i m_S \frac{d}{k \cdot k_R} \omega^3 + \frac{m_U \cdot m_F}{k \cdot k_R} \omega^4}$$

wobei

| | |
|---|---|
| $m_F$ | gefederte Masse [kg] |
| $m_U$ | ungefederte Masse [kg] |
| $m_S$ | statische Gesamtmasse [kg] |
| k | Federkonstante der Aufhängfeder [N/m] |
| $k_R$ | Federkonstante des Reifens [N/m] |
| d | Dämpfungskonstante des Dämpfers [kg/s] |
| $\omega$ | Kreisfrequenz der Erregerschwingung [1/s] |

Alle folgenden Berechnungsschritte wurden mit einer Computer-Algebra durchgeführt:

- Berechne aus dem komplexen Frequenzgang $F_P$ den Amplitudengang A.
- Zur Berechnung der charakteristischen Gleichung für den oberen Resonanzpunkt $f_3$ differenziere den Amplitudengang A und setze A' gleich Null.
- Löse diese Gleichung nach der Dämpfungskonstanten d auf und es gilt:

$$d_3 = g(\omega_{3,}, m_S, m_U, k_R, k),$$

- Zur Berechnung der charakteristischen Gleichung für die $\pi/2$-Frequenz $f_2$ berechne den Realteil aus A und setze $A_{re}$ gleich Null.
- Löse diese Gleichung nach der Dämpfungskonstanten d auf und es gilt

$$d_2 = h(\omega_{2,}, m_S, m_U, k_R, k),$$

In beiden Gleichungen g und h werden die Erregerfrequenzen $\omega$ und das statische Gewicht $m_S$ gemessen. Die Federkonstante der Reifens $k_R$ wird durch das Parameterschätzverfahren bestimmt und ist somit auch bekannt.

Nun besitzt man zwei Gleichungen für $d_2$ und $d_3$ mit zwei Unbekannten $m_U$ und $k_R$. Diese dürfen aber nicht direkt verknüpft werden, da die Dämpfungskonstante frequenzabhängig ist. Die Verknüpfung erfolgt im Amplitudengang A. Generiere die Amplitudengänge $A_2$ (ersetze d durch $d_2$) und $A_3$ (ersetze d durch $d_3$). Da die Amplituden in beiden Frequenzpunkten ebenfalls gemessen werden, existieren weiterhin zwei Gleichungen mit zwei Unbekannten $m_U$ und k, die nun verknüpft werden können. Nun lassen sich alle Parameter berechnen.

Die Berechnung der Parameter lassen sich also auf mehrere Nullstellenprobleme bis zur vierten Ordnung zurückführen. Lassen sich die Parameter nicht berechnen (beispielsweise keine reelle Nullstelle oder Division durch Null), ist eine Meßreihe anzunehmen, die einer Extremsituation entspricht. In solchen Fällen wird auf eine Auswertung auf Basis des Achs-Dämpfungsgrades verzichtet. Eine Extremsituation mit einem gültigen Signalverlauf und vorhandenen charakteristischen Frequenzen kann entweder auf ein sehr gutes oder ein sehr schlechtes Fahrwerk schließen. Für die Klassifizierung wird in diesem Spezialfall auf den Bodenaufstandswert zurückgegriffen. Ist dieser Wert relativ groß dann ist das Fahrwerk in Ordnung. Ist der Wert dagegen sehr klein, dann wird das Fahrwerk als schlecht klassifiziert und eine Umtauschempfehlung des Dämpfers wird ausgegeben. Ist der Bodenaufstandswert nicht klassifizierbar, so wird eine Fehlermeldung ausgegeben.

In den bisherigen Messungen ließen sich grundsätzlich alle Meßreihen berechnen, deren Signalverläufe und charakteristischen Frequenzen einwandfrei waren. Sollte der oben erwähnte Fehler auf einer außergewöhnlichen Meßsituation beruhen, so müssen die Originalmeßwerte an den Softwarepartner zu eingehenden Untersuchungen eingesendet werden. Die entsprechende Datensicherung erfolgt im Fehlerfall automatisch.

Die Ergebnisse der Parameterberechnung können nicht direkt für eine Bewertung des vermessenen Fahrwerkes verwendet werden. Gründe hierfür sind die Wahl des korrekten Berechnungsmodells, da das einfache ¼-Fahrzeug-Modell nicht zwischen der äußeren Reibung der Aufhängungsteile und der inneren Reibung der Dämpferflüssigkeit differenziert, und die mangelnde Vergleichbarkeit der Parameter im eingebauten Zustand mit gemessenen Parametern im ausgebauten Zustand. Die Dynamik beider Prüfvarianten ist sehr unterschiedlich. Beispielsweise bei der Aufnahme der Glockenkurven wird üblicherweise mit großen Hüben bei relativ niedrigen Erregerfrequenzen gemessen, während die Schwingplatte nur sehr kleine Hübe bei hohen Frequenzen am Dämpfer impliziert. Soll ein Fahrwerk über die berechneten Parameter beurteilt werden, dann müßten die Vergleichswerte für dieses Fahrwerk in einer Datenbank gehalten werden. Bei der großen Anzahl von Fahrwerkstypen und eingebauten Dämpfern ist die Realisierung einer anwenderfreundlichen Datenbank für den Werkstatteinsatz nicht möglich.

Ziel ist deshalb die Bewertung der kompletten Fahrwerkssituation, die nicht an den Fahrzeugtyp gebunden ist und die Manipulationsversuche aufdeckt oder in der Bewertung berücksichtigt. Ergebnis der Bewertung soll eine Austauschempfehlung für den eingebauten Dämpfer sein.

Dieses Ziel erfolgt über den sogenannte Achs-Dämpfungsgrad:

$$Achs_{DG} = \frac{d}{2 * \sqrt{(k + k_R) * m_U}}$$

Die hierbei verwendeten Parameter sind Resultat der sogenannten Modelliteration.

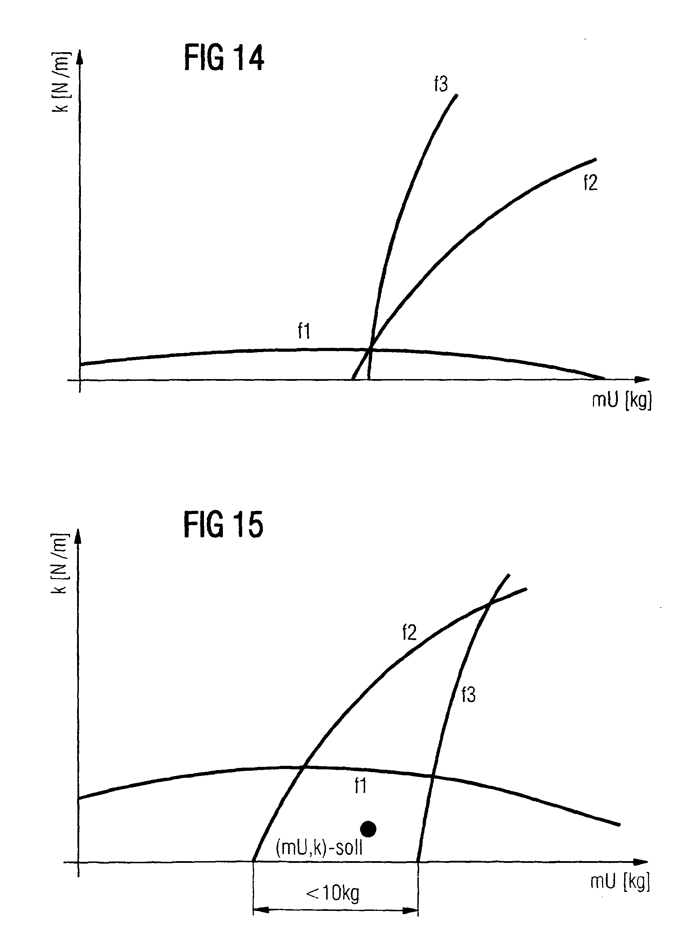

Die Ergebnisse der Parameterberechnung können aus den bekannten Gründen nicht direkt für die Ermittlung des Achs-Dämpfungsgrades verwendet werden. Dies wird ersichtlich, wenn die Lösungsmenge in einem $m_U$-k-Gebiet dargestellt wird. Theoretisch müssen sich alle Lösungskurven der verschiedenen charakteristischen Frequenzen in einem einzigen $(m_U,k)$-Punkt schneiden, wie in Figur 14 dargestellt ist.

Tatsächlich existiert kein eindeutiger Lösungspunkt $(m_U,k)$. In der Praxis wird durch die drei Lösungskurven ein Lösungsgebiet definiert, wie in Figur 15 dargestellt ist. Wie zu erkennen ist, werden die Lösungsgeraden für $f_2$ und $f_3$ auseinandergespreizt und die Lösungsgerade $f_1$ liegt deutlich über dem Soll-Lösungspunkt $(m_U,k)$. Unter Zuhilfenahme der Computeralgebra kann gezeigt werden, daß hauptsächlich der Einfluß der äußeren Reibung für diese Verschiebungen verantwortlich ist. Der Lösungsbereich für die ungefederte Masse kann jedoch auf einen Bereich <10 kg eingeschränkt werden.

Bei Fahrzeugen, die mit unterschiedlich guten Dämpfern vermessen wurden, stellte sich außerdem eine Verschiebung des gesamten Lösungsbereich in der $m_U$-Dimension ein. Bei Fahrwerken mit großer anzunehmender äußerer Reibung ist dieser Effekt besonders deutlich.

| Ungefederte Masse $M_U$ (kg) bei unterschiedlichen Dämpferleistungen | gut | mittel | schlecht |
|---|---|---|---|
| BMW 740i | 32,0 | 39,5 | 46,0 |
| Ford Escord | 29,0 | 30,5 | 29,5 |

Für die Berechnung des korrekten Lösungspunktes wird eine sogenannte Modelliteration durchlaufen. Ausgehend von den originalen Meßwerten werden iterativ die Meßwerte verändert um die Effekte der äußeren Reibung zu eliminieren. Der Algortihmus terminiert, wenn sich alle drei Lösungsgeraden genau in einem Punkt schneiden und speziell die $f_1$-Iterationsgerade gegen die f1-Soll-Lösungsgerade konvergiert.

Die Modelliteration ist in dieser Form schwer zu handhaben. Die resultierenden Parameter deckten sich zum großen Teil genau mit den Herstellerangaben. Problemparameter ist die Federkonstante k, die bei einigen Fahrzeugtypen bis zu relativ 50% schwanken kann. Die Modelliteration kann Berechnungszeiten von bis zu einer Minute haben. Um die sicher terminierende Modelliteration anwenden zu können ist die Vermessung der Resonanzfrequenz $f_1$ der gefederten Masse notwendig. Der Zeitaufwand für die Messung würde dann verdoppelt werden.

Das Resonanzmaximum der Resonanzfrequenz der gefederten Masse ist bei einigen Fahrzeugtypen nicht ausgeprägt, und somit müssen Suchalgorithmen aktiviert werden, die aufgrund von empirisch bestimmten Zusammenhängen die Resonanzfrequenz $f_1$ ermitteln.

Der Aufwand zur Bestimmung der Federkonstanten k steht in keinem Verhältnis zu seinem Einfluß auf das Endresultat. Weder die Dämpfungskonstante d noch der Achs-Dämpfungsgrad werden durch die schwankende beziehungsweise fehlende Federkonstante k signifikant beeinflußt. Als Beispiel sind in der einige Werte des BMW 3.28 i aufgeführt:

BMW 318i Vorderachse rechts

| Parameter | Sollwerte | Meßreihe 1 | Meßreihe 2 |
|---|---|---|---|
| Ungefederte Masse $m_U$ (kg) | ca. 40 | 40,7 | 41,5 |
| Aufhängfeder k (N/mm) | 19,2 | 18,8 | 24,6 |
| Dämpfungskonstante d (kg/s) | ? | 1202 | 1216 |
| Achs-Dämpfungsgrad ohne k (%) | ? | 13,2 | 13,3 |
| Achs-Dämpfungsgrad inkl. k (%) | ? | 13,0 | 12,9 |

Aufgrund des geringen Einflusses auf den Achs-Dämpfungsgrad und der massiven Nachteile bei der Bestimmung der Federkonstante k wird diese vernachlässigt, sodaß sich als Achs-Dämpfungsgrad ergibt:

$$Achs_{DG} = \frac{d}{2 * \sqrt{k_R * m_U}}$$

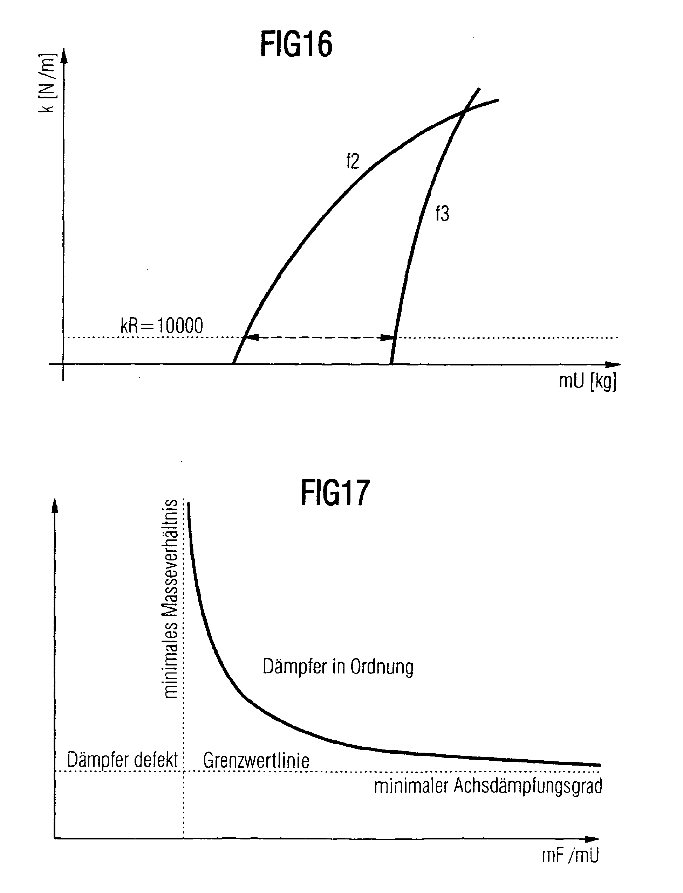

Die Modelliteration läßt sich um ein vielfaches vereinfachen und somit zeitlich beschleunigen. Die Vereinfachung ergibt sich daraus, daß die Lösungskurve für die charakteristische Resonanzfrequenz $f_1$ durch eine konstante Gerade bei k=10000N/m ersetzt wird (Figur 16).

Die dazugehörige ungefederte Masse wird durch den üblichen Iterationsalgorithmus berechnet. Dieser Algorithmus liefert den Lösungspunkt($m_u$,10000) mit der geringsten Meßwertabweichung und der besten Überdeckung der Dämpfungskonstanten der verbleibenden Lösungskurven $f_3$.

Folgende Aussagen lassen sich aus dem Achs-Dämpfungsgrad für eine Bewertung des Fahrwerkes ableiten. Es ergibt sich eine hohe Reproduzierbarkeit bei der Bestimmung der Parameter d, $k_R$ und $m_u$. Es gibt keine Bindung an spezielle Fahrzeugtypen. Je größer $k_R$ ist, desto höher ist der Anteil der eingekoppelten Schwingungsenergie in das Feder-Dämpfer-System und desto höher muß die zu erbringende Dämpferleistung sein. Je größer $m_U$ ist, desto höher muß die zu erbringende Dämpferleistung sein.

Zu Vergleichszwecken wurden Fahrzeuge mit manipulierten Dämpfern vermessen. Die Achs-Dämpfungsgrade der defekten Dämpfer wurden dann als Eckdaten zur Bestimmung einer Grenzwertlinie herangezogen. Diese Grenzwertlinie muß die charakteristischen Fahrwerkseigenschaften berücksichtigen, die noch nicht im Achs-Dämpfungsgrad eingebettet sind.

Die Probemessungen haben gezeigt, daß das Masseverhältnis von gefederter zu ungefedeter Masse $m_F/m_U$ diese entscheidende Eigenschaft darstellt. Fahrzeuge mit einem großen Verhältnis $m_F/m_U$ kamen mit wesentlich geringeren Dämpfungsgraden aus, als Fahrzeuge mit relativ kleinen Masseverhältnis, unabhängig vom Gesamtgewicht des Fahrzeuges.

Diese Erkenntnis wurde in einer Grenzwertlinie über das Masseverhältnis in die Auswertung eingebettet. Die Grenzwertlinie sollte hierbei einen hyperbolischen Verlauf besitzen mit einerseits dem minimal vertretbaren Masseverhältnisses als Polstelle und andererseits des minimalen Achs-Dämpfungsgrades als Asymptote, wie in Figur 17 dargestellt ist.

Über die verwendeten Eckdaten wurde durch eine nicht-lineare Regression die Grenzwertlinie explizit dargestellt. Das zu Grunde liegende Regressionsmodell mußte Mitglied der sogenannte Wachstumsmodelle sein. Diese zeichnen sich durch ihren streng monotonen, asymptotischen Verlauf aus, der sich mit den zuvor durchgeführten Beobachtungen deckt. Das Modell mit der besten Überdeckung ist das sogenannte Saturationsmodell. Dieses ermöglicht die Beschreibung der Grenzwertlinie durch die beiden Parameter a und b:

$$Achs_{DGgrenz} = \frac{a * {}^{m_F}\!/_{m_U}}{b + {}^{m_F}\!/_{m_U}}$$

wobei

a die Asymptote, das heißt der minimale Achs-Dämpfungsgrad, ist.

b die Polstelle, das heißt das physikalisch minimal vertretbare Massenverhältnis, ist.

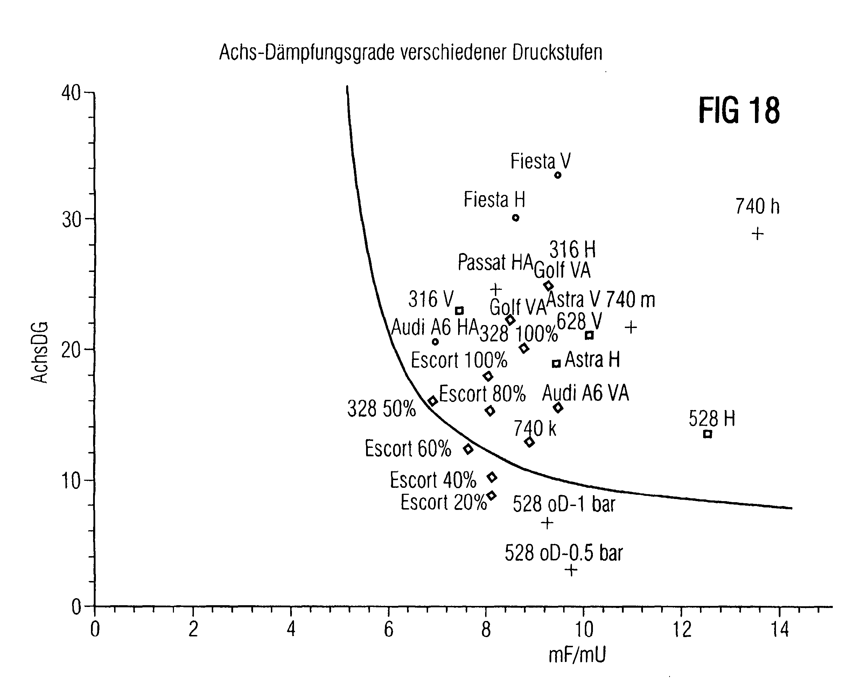

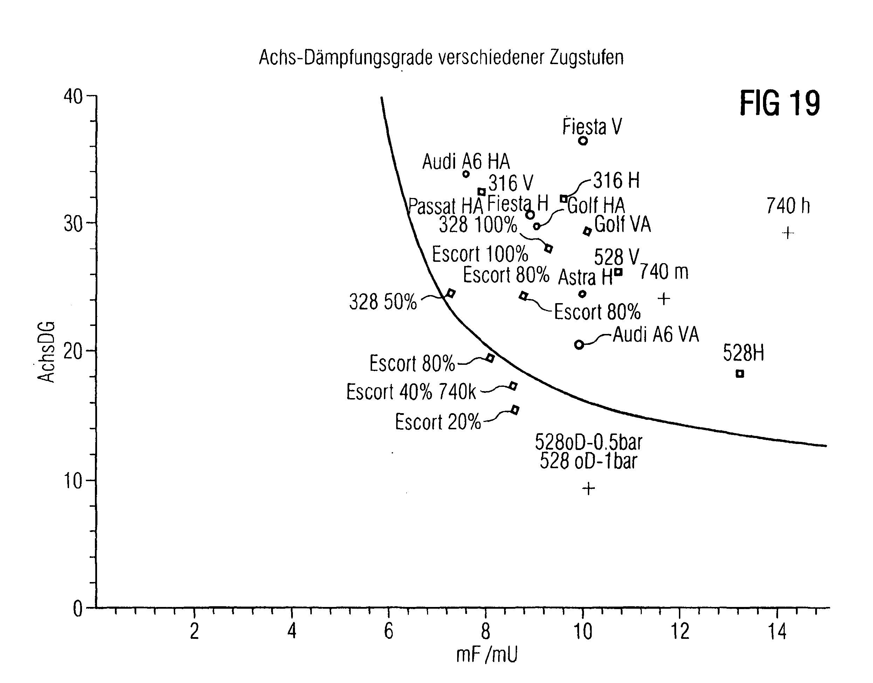

In den Figuren 18 und 19 sind die Achs-Dämpfungsgrade verschiedener vermessenen Fahrzeugtypen für die Druck- und die Zugstufe dargestellt. Alle Fahrzeugtypen wurden hierbei bei ihrem Soll-Reifendruck und Leergewicht beziehungsweise einem Fahrer vermessen.

Die Eckdaten der Grenzwertlinie sind der 50%-Dämpfer des BMW 3.28, der 60%-Dämpfer des Ford Escort, das minimale Massenverhältnis von 5 und der minimale Achs-Dämpfungsgrad von 7%. Die neuwertigen Fahrwerks- und Achskonstruktionen werden mit den EUSAMA-Test durchgehend schlecht bewertet, wie aus der folgenden Tabelle zu ersehen ist:

| Fahrwerk | EUSAMA-Wert (%) |
|---|---|
| BMW 3.28i HA | 22 |
| BMW 5.28T HA | 25 |
| Audi A& VA | 37 |
| Audi A6 HA | 32 |
| Passat HA | 39 |
| Golf 3 HA | 35 |

Die Achs-Dämpfungsgrade liegen dagegen deutlich im Bereich der einwandfreien Fahrwerke. Problemfälle sind nur die Hinterachse des BMW 5.28T und die Vorderachse des Audi A6. Beide Fahrwerke haben kleinere Achs-Dämpfungsgrade als beispielsweise der 50%-Dämpfer des BMW 3.28i. Aber beide Massenverhältnisse liegen deutlich über dem des BMW 3.28i und damit deutlich über der Grenzwertlinie.

Um weitere Meßpunkte unterhalb der Grenzwertlinie zu erhalten wurde die Hinterachse des BMW 5.28 ohne Dämpfer vermessen. Das Fahrzeug konnte aber nur mit Reifenunterdruck von -0,5 bar und -1.0 bar vermessen werden weil bei Normaldruck der Reifen von der Schwingplatte abhob.

Das Problem der Parameterberechnung, bei der die ungefederte Masse $m_U$ je nach Qualität der eingebauten Dämpfer schwankt, wird auch durch die Modelliteration nicht behoben. Aber dies ist beim Einsatz des Massewertes $m_U$ innerhalb des Achs-Dämpfungsgrad eher ein Vorteil, wie sich aus den drei Meßpunkte für den BMW 740i ergibt. Über eine Schnittstelle konnte zwischen den Dämpfereinstellungen hart, mittel oder komfort ausgewählt werden:

Die schlechte Dämpferleistung der Komfortstellung impliziert ein kleines Massenverhältnis und schiebt den Achs-Dämpfungsgrad näher an die Grenzlinie.

Die gute Dämpferleistung der Hartstellung impliziert ein großes Massenverhältnis und schiebt den Achs-Dämpfungsgrad weiter von der Grenzlinie weg. Dieser Effekt tritt verstärkt bei Fahrzeugen mit einer hohen äußeren Reibung auf.

Die stufengetrennte, Fahrzeugtyp übergreifende Bewertung des Fahrwerkes auf der Basis des Achs-Dämpfungsgrades über dem Massenverhältnis ist ein wesentlicher Fortschritt gegenüber der EUSAMA-Methode.

Zur möglichst objektiven Bewertung des Prüfverfahrens müssen zusätzlich die Reaktionen auf Manipulationsversuche des neuen Prüfverfahrens mit den entsprechenden EUSAMA-Werten verglichen werden. Folgende Parameter wurden hierzu manipuliert:

Luftdruck - in festen 0.5 bar-Schritten von 1.0 bar Unterdruck bis 1.0 bar Überdruck, bezogen auf den Solldruckwert;

Beladung - alle Fahrzeuge leer, einige zusätzlich mit Fahrer und ein Fahrzeug in seiner vorgegebenen Konstruktionslage;

Temperatur - zu Beginn der Erwärmungsphase (im Winter 1996/97) ein Fahrzeug bei 0° Celsius und bei 15° Celsius;

Bereifung - ein Fahrzeug mit drei unterschiedlichen Reifen-Varianten. Einige Fahrzeuge mit einer speziellen Radklammer zur Variation der ungefederten Masse $m_U$.

Die aufgeführten Abbildungen stellen nur die Zugstufenergebnisse dar. Die entsprechenden Werte für die Druckstufe unterscheiden sich kaum von denen der Zugstufe. Die Grenzwertlinien für die Zugstufe sind den Meßpunkten entnommen, die bei Soll-Luftdruck und ohne Beladung (maximal ein Fahrer) aufgenommen wurden (siehe Figur 19).

Die eingeklammerten Werte entsprechen den Bodenaufstandswerten in diesen Meßpunkten. Diese sind notwendig um die Reaktionen des EUSAMA-Verfahrens mit denen des neuen Verfahrens zu vergleichen.

Der Reifenluftdruck ist eines der Hauptprobleme bei der Fahrwerksvermessung. Je nach Intention können die Ergebnisse der Auswertung manipuliert werden. Die Vorkontrolle des Reifenluftdruckes soll Schwankungen gegenüber dem Solldruckwert erkennen und ist der primäre Vorteil des neuen Prüfverfahrens. Bei dem derzeitigen Erfahrungsstand kann davon ausgegangen werden, daß Luftdruckabweichungen von 0.5 bar sicher erkannt werden. Mit weiterem Erfahrungszuwachs könnte eventuell eine Abweichung von 0.25 bar erreicht werden. Engere Abweichungsintervalle sind theoretisch nicht möglich, da die Summe der Abweichungen der Parameterschätzung, der Sollwertvorgabe, und des Temperaturdrifts eine natürliche Untergrenze bilden.

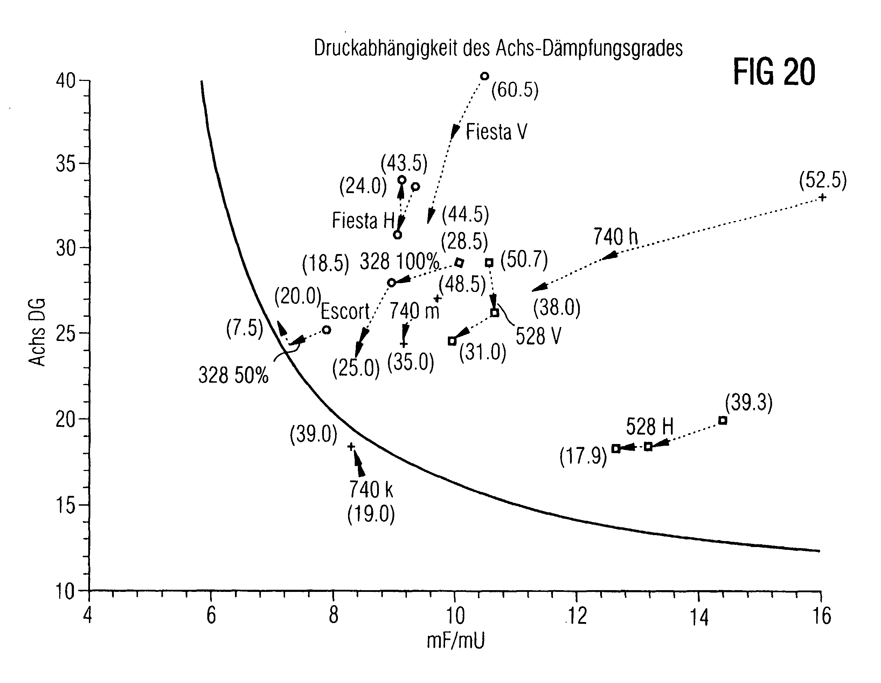

In der Figur 20 sind die Meßpunkte für den Solluftdruck sowie die Meßpunkte für eine Druckabweichung von 0.5 bar aufgenommen. Größere Luftdruckschwankungen sind nicht dargestellt, da diese sicher von der Vorkontrolle herausgefiltert werden. Die Pfeilrichtung stellt die Erhöhung des Luftdruck um 0.5 bar dar.

Folgende Details lassen sich aus der obigen Grafik ableiten. Mit steigendem Reifenluftdruck fällt der Dämpfungsgrad und das Massenverhältnis. Gute Fahrwerke werden durch den Reifenluftdruck stärker beeinflußt als schlechte Fahrwerke. Eine Änderung des Bewertungsstatus tritt nicht auf. Der Einfluß des Reifenluftdruckes auf EUSAMA-Werte ist dagegen bei schlechten Fahrwerken besonders groß so, daß sogar eine Austauschempfehlung manipuliert werden kann. Die EUSAMA-Werte werden durch die Luftdruckschwankung teilweise verdreifacht. Die Variation der Bewertungspunkte ($AchS_{DG}, m_F/m_U$) liegt sicher unter 50%.

Der Einfluß des Luftdruckes ist im Ergebnis nicht eliminiert, aber gegenüber der EUSAMA-Methode im Mittel um den Faktor 4 eingeschränkt worden. Grobe Abweichungen zum Solldruck können erkannt werden. Eine Manipulation der Austauschempfehlung über den Luftdruck ist nicht möglich! Die schlechten Fahrwerke variieren bei Luftdruckänderungen sogar nur um ihren, auf den Meßwertfehlern basierenden, Fortpflanzungsfehler.

Der BMW 3.28i wurde in seiner Konstruktionslage, bei einer Zuladung von ca. 230kg, mit einem Fahrer und leer vermessen. Die Differenz zwischen leerem Fahrzeug und Fahrzeug mit Fahrer war so gering, daß sie nicht in die Darstellung aufgenommen wurde:

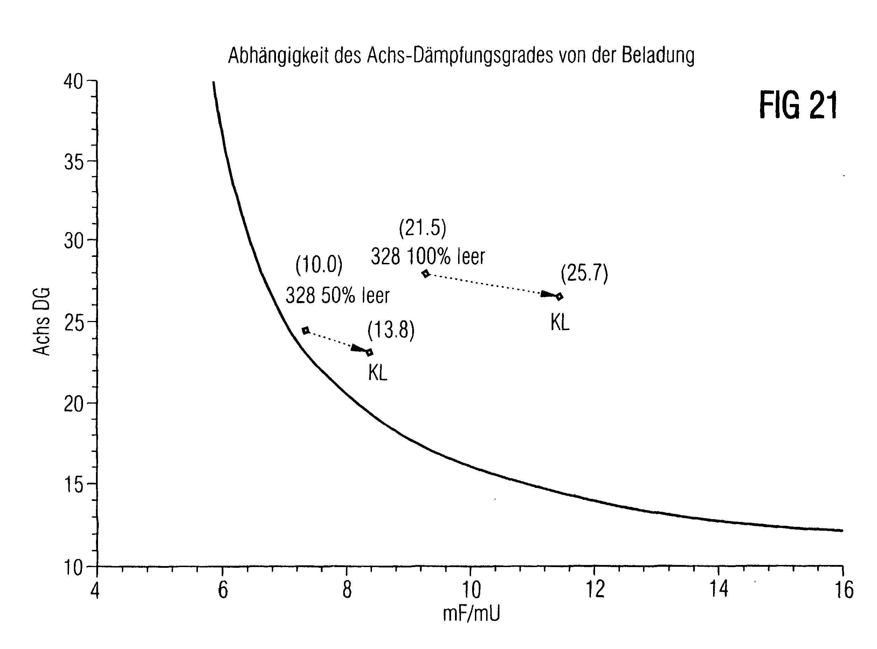

Folgende Details lassen sich aus der Figur 21 ableiten. Die Achs-Dämpfungsgrade werden durch die Beladung um 2% verringert. Dies steht im Gegensatz zu den EUSAMA-Werten, die durch die Zuladung leicht ansteigen. Die berechnete Werte für die ungefederte Masse $m_U$, ist mit und ohne Beladung nahezu gleich. Durch das zugeladene Gewicht wird dadurch das Massenverhältnis vergrößert und der Bewertungspunkt in den positiven Bereich geschoben.

Die Auswertung reagiert auf die Zuladung eines Fahrzeuges mit der besseren Klassifizierung der Fahrwerkseigenschaften. Die Bewertung dieser Fahrwerkssituation ist grundsätzlich korrekt, aber es besteht keine Möglichkeit die zugeladene Masse von der unbeladenen Fahrzeugmasse zu unterscheiden. Die Reaktion ist gegenüber der EUSAMA-Methode signifikanter.

Eine Manipulation der Austauschempfehlung über die Zuladung ist deshalb bei Fahrwerken in der Umgebung der Grenzwertlinie möglich.

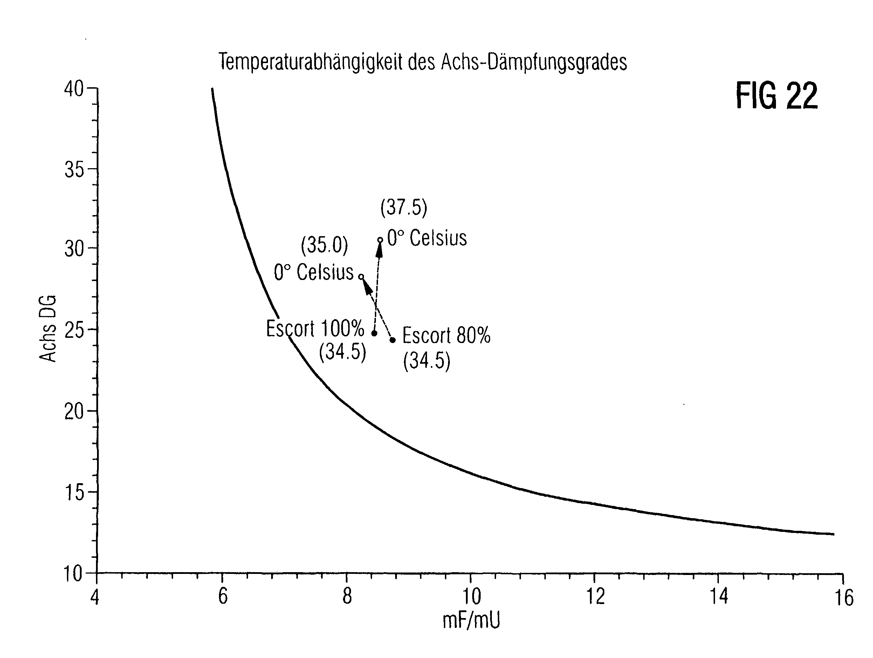

Der Einfluß der Umgebungstemperatur wurde untersucht, indem Messungen bei etwa 0° Celsius und anschließend Umgebungstemperatur von ca. 15° Celsius durchgeführt wurden. Aus der Figur 22 ergibt sich, daß die Achs-Dämpfungsgrade durch die Abkühlung zunehmen, und daß das Massenverhältnis durch die Abkühlung nicht verändert wird. Die EUSAMA-Werte bleiben nahezu unverändert. Die Manipulation der Austauschempfehlung über die Umgebungstemperatur kann somit nicht ausgeschlossen werden.

Mit der Variation der Bereifung wird die Federkonstante des Reifens und die ungefederte Masse geändert. Zu diesem Punkt wurden zwei Versuchsreihen gefahren:

- Der BMW 3.28i wurde mit drei kompletten Reifensätzen in der Konstruktionslage vermessen.
- Mehrere Fahrzeuge wurde mit einer speziellen Radklammer (5.6 kg) beziehungsweise einer angeschraubten Stahlplatte (14.3 kg) an der Reifenfelge vermessen.

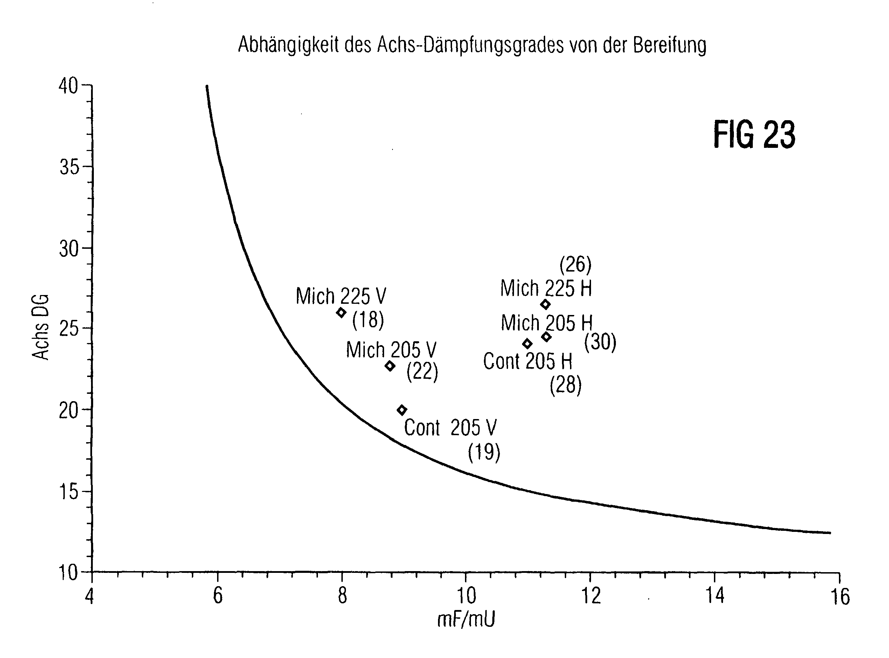

Folgendes läßt sich aus der Figur 23 ableiten. Die Bewertungspunkte ($AchS_{DG}, m_F/m_U$) ändern sich in ihrer Klassifizierung nicht. Der leicht verbesserte Achs-Dämpfungsgrad der schwereren Bereifung wird durch das kleiner werdende Massenverhältnis ausgeglichen. Dieser Effekt ist besonders bei kleinen Massenverhältnissen deutlicher ausgeprägt. Die EUSAMA-Werte fallen mit steigender Reifenfederkonstante $k_R$.

Ein Wechsel der Bereifung bewirkt hauptsächlich Änderungen in der Federkonstante $k_R$ und somit im Kopplungsgrad. Der Einfluß auf die ungefederte Masse ist aufgrund der geringen Massenunterschiede im Bereich der Berechnungsgenauigkeit. Der Einfluß der Federkonstante $k_R$ wird im Achs-Dämpfungsgrad berücksichtigt, während die EUSAMA-Methode bei einem solchen Kopplungsanstieg die schlechtere Bodenhaftungswerte liefert. Eine Manipulation der Austauschempfehlung ist nicht gegeben.

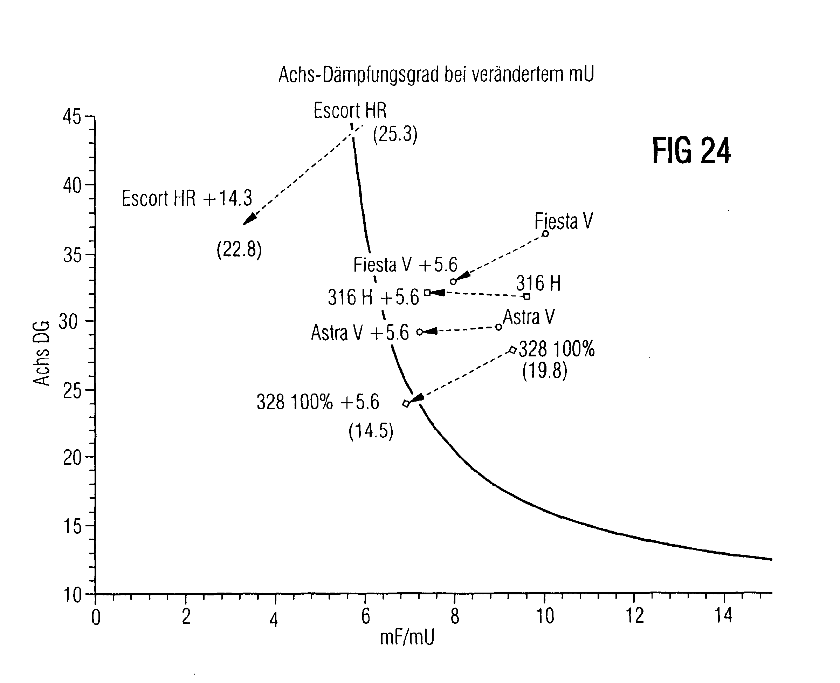

Folgendes läßt sich aus der Figur 24 ableiten. Die Achs-Dämpfungsgrade werden wie die Bodenhaftungswerte durch das zusätzlich Gewicht leicht verringert. Das Zusatzgewicht geht voll in die ungefederte Masse ein und verkleinert das Massenverhältnis zum Teil drastisch.

Durch die Manipulation der ungefederten Masse kann ein schlechtes Fahrwerk vorgetäuscht werden. Die EUSAMA-Werte reagieren auf die Manipulation tendentiell gleich, aber nicht so signifikant. Das hat zur Folge, daß eindeutig mangelhafte Fahrwerke noch als gut klassifiziert werden.

Zusammenfassend ergibt sich zu den Manipulationsmöglichkeiten folgendes. Die Manipulation des Luftdruckes wird durch die Vorkontrolle über $k_R$ und $m_s$ ausgeschlossen. Gegenüber der EUSAMA-Methode ergibt sich der Vorteil, daß eine Aussage über den Luftdruck möglich ist und die Empfindlichkeit des Prüfverfahrens gegenüber dem Luftdruck geringer ist. Die Manipulation über die Temperatur des Stoßdämpfers wird durch die Aufwärmphasen ausgeschlossen. Eine Manipulation über die Beladung setzt eine grobe Manipulation von außen voraus und kann daher ebenfalls ausgeschlossen werden. Im übrigen fließt die Beladung in das Massenverhältnis ein, siehe die oben erwähnten graphischen Darstellung. Eine Manipulation über die Bereifung ist nicht möglich, weil eine entsprechende Kontrolle erfolgt. Gegenüber der EUSAMA-Methode ergibt sich der Vorteil, daß der Einfluß der veränderten Federkonstante herausgerechnet wird.

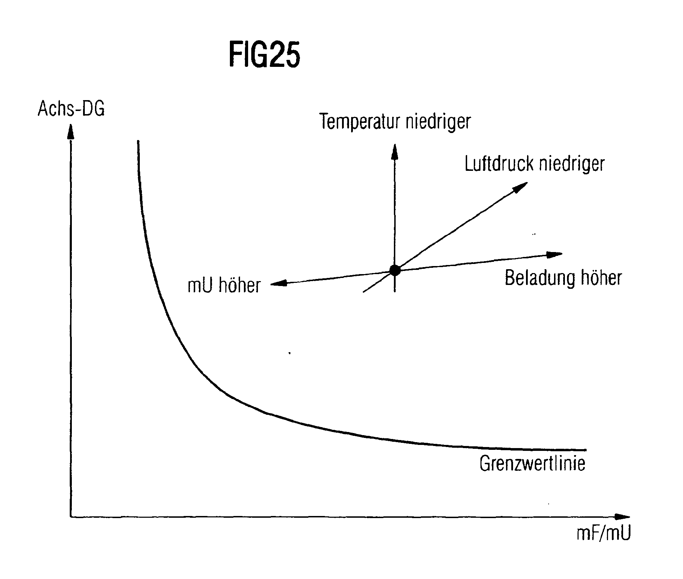

Eine Manipulation der Masse $m_U$ kann ein schlechteres Fahrwerk vortäuschen, was jedoch eine Grobmanipulation von außen voraussetzt und daher ausgeschlossen werden kann. Gegenüber der EUSAMA-Methode ergibt sich der Vorteil, daß die Zuladung in das Massenverhältnis einfließt und damit in das Prüfverfahren eingebettet wird. Die Figur 25 zeigt zusammenfassend die Verschiebungsrichtungen der Einflußparameter in dem Gebiet Achs-Dämpfungsgrad zu mF/$m_U$. Manipulationen werden somit entweder ausgeschlossen oder sie gehen nicht in signifikanter Weise in die Meßergebnisse ein.

**Patentansprüche**

1. Verfahren zum Prüfen von am Fahrzeug eingebauten Stoßdämpfern, indem von einer Schwingplatte, auf der das Kraftfahrzeug mit einem Rad steht und die mit einer geeigneten Amplitude und variabler Frequenz in vertikaler Richtung hin- und herbewegbar ist, eine Schwingung auf das Rad ausgeübt wird, wobei die Dämpfung des Stoßdämpfers aus der Kraftantwort des Fahrwerkes auf die Schwingungen der Schwingplatte und der relativen Phasenfunktion zwischen der von der Schwingplatte ausgeübten Kraft und der Bewegung der Schwingplatte erhalten wird, wobei das aufbereitete Meßsignal, das die Kraftantwort des Stoßdämpfers darstellt, der Auswertung unterworfen werden, **dadurch gekennzeichnet, daß** als Bewertungsgrundlage für die Qualität des eingebauten Stoßdämpfers der Achs-Dämpfungsgrad in Bezug auf den Quotienten der gefederten Masse zu der ungefederten Masse berechnet wird, wobei die Meßwerte des Achs-Dämpfungsgrades zu einer Kennlinie eines Grenzwertdämpfungsgrades in Beziehung gesetzt werden, die den Bereich nichtakteptabler Achs-Dämpfungsgrade begrenzt.

2. Verfahren nach Anspruch 1, **dadurch gekennzeichnet, daß** vor der eigentlichen Auswertung die Bodenhaftung des Fahrzeuges während der Messung überprüft wird, und daß, wenn die Bodenhaftung einen vorgegebenen Wert unterschreitet, die Auswertung beendet und die Stoßdämpfer als ungenügend klassifiziert wird.

3. Verfahren nach Anspruch 1, **dadurch gekennzeichnet, daß** das Meßsignal, durch eine Zug-Druckstufen-Trennung in ein Druckstufensignal, welches für die Druckstufe des Stoßdämpfers charakteristisch ist, und ein Zugstufensignal aufgetrennt wird, welches für die Zugstufe des Stoßdämpfers charakteristisch ist, und daß das Druckstufensignal und das Zugstufensignal getrennt getrennt bezüglich des Achs-Dämpfungsgrades bewertet werden.

4. Verfahren nach einem der vorhergehenden Ansprüche, **dadurch gekennzeichnet, daß** zur Extraktion der charakteristischen Frequenz die gemessenen Amplituden- und Phasenspektren bereinigt werden, indem der Kurvenabschnitt des Phasenverlaufs durch ein Polynom interpoliert wird.

5. Verfahren nach Anspruch 4, **dadurch gekennzeichnet, daß** die Stützpunkte für die Interpolation ab der Resonanzfrequenz beginnen und beim lokalen Maximum des Phasengangs enden.

6. Verfahren nach Anspruch 4, **dadurch gekennzeichnet, daß** die Frequenzen $f_2$ und $f_3$ einem Plausibilitätstest unterzogen werden, wobei der Stoßdämpfer als gut klassifiziert wird, wenn die $\pi/2$-Frequenz $f_2$ nicht existiert, und als schlecht klassifiziert wird, wenn die $\pi/2$-Frequenz $f_2$ größer oder gleich der Resonanzfrequenz $f_3$ ist.

7. Verfahren nach Anspruch 1 bis 4, **dadurch gekennzeichnet, daß** eine Parameterberechnung basierend auf dem komplexen Frequenzgang des einfachen ¼-Fahrzeug-Modells:

$$F_P = \frac{-m_S\omega^2 - im_S\frac{d}{k}\omega^3 + \frac{m_U \cdot m_F}{k}\omega^4}{1 + i\frac{d}{k}\omega - (\frac{m_F}{k} + \frac{m_F}{k_R} + \frac{m_U}{k_R})\omega^2 - im_S\frac{d}{k \cdot k_R}\omega^3 + \frac{m_U \cdot m_F}{k \cdot k_R}\omega^4}$$

durchgeführt wird, wobei

$m_F$ gefederte Masse [kg]
$m_U$ ungefederte Masse [kg]
$m_S$ statische Gesamtmasse [kg]
k Federkonstante der Aufhängfeder [N/m]
$k_R$ Federkonstante des Reifens [N/m]
d Dämpfungskonstante des Dämpfers [kg/s]
$\omega$ Kreisfrequenz der Erregerschwingung [1/s]

und daß aus den Parametern der Achs-Dämpfungsgrad:

$$Achs_{DG} = \frac{d}{2 * \sqrt{(k + k_R) * m_U}}$$

bestimmt wird, wobei die hierbei verwendeten Parameter ein Resultat der Modelliteration sind.

8. Verfahren nach Anspruch 7, **dadurch gekennzeichnet, daß** zur Parameterschätzung des Wertes $k_R$ eine Verlustfunktion:

$$V = \sum_{\nu=0}^{N} \psi_\nu [R_\nu(1 - a_2\omega^2 + a_4\omega^4) - I_\nu(a_1\omega - a_3\omega^3) - (b_0 - b_2\omega^2 + b_4\omega^4)]^2$$

$$+ \psi_\nu [R_\nu(a_1\omega - a_3\omega^3) + I_\nu(1 - a_2\omega^2 + a_4\omega^4) - (b_1\omega - b_3\omega^3)]^2$$

verwendet wird, die die Abweichung aller Stützpunkte für den zu schätzenden komplexen Frequenzgang berechnet, wobei

$R_\nu$ gemessener Realanteil des Stützpunktes $\nu$
$I_\nu$ gemessener Imaginäranteil des Stützpunktes $\nu$
$\Psi_\nu$ Gewichtsfunktion des Stützpunktes $\nu$
N Anzahl der Stützpunkte - 1

gilt und die Verlustfunktion nach jedem zu schätzenden Koeffizienten differenziert und Null gesetzt wird, wobei die Asymptote des konvergenten Verlaufs des Amplitudenspektrums gegen die Federkonstante des Reifens $k_R$ bei großen Frequenzen sich durch eine modifizierte Form des Parameterschätzverfahrens berechnenläßt, bei der von den ursprünglich neun zu schätzenden Parametern die Parameter $b_0$ und $b_1$ grundsätzlich Null sind und der Parameter $b_2$ die ebenfalls bekannte statische Masse $m_S$ ist, sodaß das lineare Gleichungssystem sich somit auf sechs lineare Gleichungen reduziert.

9. Verfahren nach Anspruch 8, **dadurch gekennzeichnet, daß** bei der Schätzung eine Vielzahl, beispielsweise 20, unterschiedliche Gewichtsfunktionen durchlaufen werden, daß für jede Gewichtsfunktion dann die theoretischen Stützpunkte berechnet werden und daß dann die Gewichtsfunktion mit der geringsten mittleren Abweichung in den verwendeten Stützpunkten verwendet wird.

**10.** Verfahren nach Anspruch 8 oder 9, **dadurch gekennzeichnet, daß** nach der Parameterschätzung des Parameters $k_R$ dieser Wert in dem $k_R$- mS-Gebiet mit einer Soll-$k_R$-Kurve verglichen und die Messung nicht ausgewertet wird, wenn der geschätzte $k_R$-Wert außerhalb eines vorgegebenen Toleranzbandes liegt.

**11.** Verfahren nach Anspruch 7, **dadurch gekennzeichnet, daß** die Signalform des Frequenzganges überprüft wird, und daß Messungen, die für einen Haftreibungsabriß charakteristisch sind, und Messungen, die einen Frequenzgang mit kein eindeutiges Resonanzmaximum des Amplitudenspektrums aufweisen, verworfen werden.

**12.** Verfahren nach Anspruch 7, **dadurch gekennzeichnet, daß** ein Frequenzgang, der zwischen den charakteristischen Frequenzen $f_2$ und $f_3$ kein lokales Minimum aufweist, zur weiteren Parameterberechnung freigegeben wird.

**13.** Verfahren nach Anspruch 7, **dadurch gekennzeichnet, daß** zur Parameterberechnung folgende Berechnungsschritte mit einer Computer-Algebra durchgeführt werden:

- berechne aus dem komplexen Frequenzgang $F_P$ den Amplitudengang A;
- zur Berechnung der charakteristischen Gleichung für den oberen Resonanzpunkt $f_3$ differenziere den Amplitudengang A und setze A' gleich Null;
- löse diese Gleichung nach der Dämpfungskonstanten d auf und es gilt:

$$d_3 = g(\omega_{3,}, m_S, m_U, k_R, k).,$$

- zur Berechnung der charakteristischen Gleichung für die $\pi/2$-Frequenz $f_2$ berechne den Realteil aus A und setze $A_{re}$ gleich Null;
- löse diese Gleichung nach der Dämpfungskonstanten d auf und es gilt:

$$d_2 = h(\omega_{2,}, m_S, m_U, k_R, k);$$

wobei

in beiden Gleichungen g und h die Erregerfrequenzen $\omega$ und das statische Gewicht $m_S$ gemessen werden, die Federkonstante der Reifens $k_R$ aus dem Parameterschätzverfahren bekannt ist, sodaß zwei Gleichungen für $d_2$ und $d_3$ mit zwei Unbekannten $m_U$ und $k_R$. verbleiben;
- generiere die Amplitudengänge $A_2$, wobei d durch $d_2$ ersetzt wird, und $A_3$, wobei d durch $d_3$ ersetzt wird, wobei weiterhin zwei Gleichungen mit zwei Unbekannten $m_U$ und k erhalten werden, die zur Berechnung der Parameter verknüpft werden.

**14.** Verfahren nach Anspruch 7, **dadurch gekennzeichnet, daß** aufgrund des geringen Einflusses der Federkonstante k auf den Achs-Dämpfungsgrad die Federkonstante k vernachlässigt wird, sodaß sich als Achs-Dämpfungsgrad ergibt:

$$Achs_{DG} = \frac{d}{2 * \sqrt{k_R * m_U}}$$

wobei die Modelliteration sich stark vereinfachen und somit zeitlich beschleunigen läßt, da die Lösungskurve für die charakteristische Resonanzfrequenz $f_1$ durch eine konstante Gerade bei k=10000N/m ersetzt wird, wobei die dazugehörige ungefederte Masse durch den üblichen Iterationsalgorithmus berechnet wird, der den Lösungspunkt $(m_U, 10000)$ mit der geringsten Meßwertabweichung und der besten Überdeckung der Dämpfungskonstanten der verbleibenden Lösungskurven $f_3$ liefert.

**15.** Verfahren nach Anspruch 7, **dadurch gekennzeichnet, daß,** wenn die Parameter nicht berechenbar sind, die Bodenhaftung überprüft wird, und daß, wenn eine große Bodenhaftung festgestellt wird, der Dämpfer als gut klassifiziert wird, während in dem anderen Fall die Auswertung beendet und der Dämpfer als ungenügend klassifiziert wird.

16. Verfahren nach Anspruch 7, **dadurch gekennzeichnet, daß** zur Bestimmung einer Grenzwertlinie Fahrzeuge mit manipulierten Dämpfern vermessen wurden, wobei die Achs-Dämpfungsgrade der defekten Dämpfer als Eckdaten herangezogen wurden.

17. Verfahren nach Anspruch 16, **dadurch gekennzeichnet, daß** die Grenzwertlinie einen hyperbolischen Verlauf besitzt mit einerseits dem minimal vertretbaren Masseverhältniß als Polstelle und andererseits dem minimalen Achs-Dämpfungsgrad als Asymptote.

18. Verfahren nach Anspruch 16 oder 17, **dadurch gekennzeichnet, daß** die Grenzwertlinie durch eine nicht-lineare Regression über die verwendeten Eckdaten dargestellt wird, wobei als Regressionsmodell ein Wachstumsmodell verwendet wird, das einen streng monotonen, asymptotischen Verlauf hat und sich mit den zuvor durchgeführten Messungen deckt.

19. Verfahren nach Anspruch 18, **dadurch gekennzeichnet, daß** als Modell das sogenannte Saturationsmodell verwendet wird, wobei die Grenzwertlinie durch die beiden Parameter a und b zu beschreiben ist:

$$Achs_{DGgrenz} = \frac{a * {}^{m_F}/_{m_L}}{b + {}^{m_F}/_{m_L}}$$

wobei

a die Asymptote, das heißt der minimale Achs-Dämpfungsgrad, ist.
b die Polstelle, das heißt das physikalisch minimal vertretbare Massenverhältnis, ist.

20. Verfahren nach Anspruch 14, **dadurch gekennzeichnet, daß** nach der Berechnung des Achs-Dämpfungsgrades und dessen Einordnung in das Diagramm von Achs-Dämpfungsgrad zu dem Quotienten der gefederter Masse zu der ungefederten Masse eine Empfehlung bezüglich der Notwendigkeit eines Austausches des Stoßdämpfers gegeben wird.

21. Verfahren nach Anspruch 1, **dadurch gekennzeichnet, daß** das Meßsignal, das den zeitlichen Verlauf der Kraftantwort bei einer Zielfrequenz darstellt, durch eine Zug-Druckstufen-Trennung in ein Druckstufensignal, welches für die Druckstufe des Stoßdämpfers charakteristisch ist, und ein Zugstufensignal aufgetrennt wird, welches für die Zugstufe des Stoßdämpfers charakteristisch ist, und daß das Druckstufensignal und das Zugstufensignal getrennt der weiteren Verarbeitung zugeführt werden.

22. Verfahren nach Anspruch 21, **dadurch gekennzeichnet, daß** die Zug-Druckstufen-Trennung aufgrund einer Frequenztrennung durchgeführt wird, wobei die Grundfrequenz erhalten bleibt und die Meßwerte während der Zeitdauer $\pi/2$ der positiven Halbwelle der Druckstufe und die Meßwerte der negativen Halbwelle während der Dauer $\pi/2$ der Zugstufe zugeordnet werden.

23. Verfahren nach Anspruch 21, **dadurch gekennzeichnet, daß** die Zug-Druckstufen-Trennung aufgrund der Amplitudentrennung durchgeführt wird, wobei die höhere Grundfrequenz der Druckstufe und die niedrigere Frequenz der Zugstufe für die Berechnung der Amplitude **dadurch** berücksichtigt wird, daß die schmalere, positive Druckstufenhalbwelle um $\delta\varphi$ nach rechts verschoben wird, während die breitere, negative Zugstufenhalbwelle um $\delta\varphi$ nach links verschoben wird.

24. Verfahren nach Anspruch 22, **dadurch gekennzeichnet, daß** die durch die Frequenztrennung erhaltenen Signale einer digitalen Filterung, vorzugsweise einer Fourier-Transformation und besonders bevorzug einer Fast-Fourier-Transformation, unterworfen werden.

25. Verfahren nach Anspruch 23, **dadurch gekennzeichnet, daß** die durch die Amplitudentrennung erhaltenen Signale einer digitalen Filterung, vorzugsweise einer Fourier-Transformation und besonders bevorzug einer Fast-Fourier-Transformation, unterworfen und die Phasenverschiebungen $\delta\varphi$ addiert werden.

26. Verfahren nach Anspruch 24 oder 25, **dadurch gekennzeichnet, daß** bei der Fast-Fourier-Transformation nur die Grundschwingung herausgefiltert wird.

27. Verfahren nach einem der vorangegangenen Ansprüche, **dadurch gekennzeichnet, daß** nach der digitalen Filterung eine Gütebeurteilung des verarbeiteten Signales aus Sinustreue durchgeführt wird, wobei für jeden gemessenen Wert die relative Abweichung zum Sinussignal, das den ideal gefilterten Wert darstellt, berechnet, die Quersumme aller Abweichungen gebildet und Meßpunkte verworfen werden, deren mittlere Abweichung von dem ideal gefilterten Wert einen vorgegebenen Wert, vorzugsweise 5 %, übersteigt.

28. Verfahren nach einem der vorhergehenden Ansprüche, **dadurch gekennzeichnet, daß** die Bodenhaftung, d. h. der Kontakt des Rades mit der Schwingplatte überprüft wird, und daß bei einer Bodenhaftung kleiner als einem vorgegebenen Wert, vorzugsweise 10 %, die Messung abgebrochen wird.

29. Verfahren nach einem der vorhergehenden Ansprüche, **dadurch gekennzeichnet, daß** drei komplette Umläufe gemessen werden, wobei n Meßwerte, vorzugsweise 256 Meßwerte, pro Umdrehung aufgenommen werden, und daß mehrere Umdrehungen, vorzugsweise drei Umdrehungen, aufgenommen und einer Mittelwertbildung unterworfen werden.

30. Verfahren nach einem der vorhergehenden Ansprüche, **dadurch gekennzeichnet, daß** der Einfluß der Schwingplatte auf das Meßergebnis kompensiert wird, indem bei einem dynamischen Kalibrierdurchlauf der Frequenzgang der Schwingplatte aufgenommen und das Amplitudenspektrum durch einen Parabelast interpoliert wird.

31. Verfahren nach einem der vorhergehenden Ansprüche, **dadurch gekennzeichnet, daß** mit der Meßwertaufnahme erst dann begonnen wird, wenn nach einem Anfahren eines Frequenzpunktes die Frequenzschwankungen eine vorgegebene Toleranz nicht mehr überschreiten.

32. Verfahren nach einem der vorhergehenden Ansprüche, **dadurch gekennzeichnet, daß** Frequenzpunkte, bei denen sich die Frequenzschwankungen nicht stabilisieren lassen, verworfen werden.

33. Verfahren nach einem der vorhergehenden Ansprüche, **dadurch gekennzeichnet, daß** vor den eigentlichen Meßlauf eine Erwärmungsphase für den Stoßdämpfer vorgesehen wird, um den Stoßdämpfer bei der Messung auf eine vorbestimmte Temperatur zu bringen.

34. Verfahren nach Anspruch 33, **dadurch gekennzeichnet, daß** in der Erwärmungsphase der Stoßdämpfer in der Umgebung der oberen Resonanzfrequenz bewegt wird, um die Dämpfungsflüssigkeit zu erwärmen.

35. Verfahren nach einem der vorhergehenden Ansprüche, **dadurch gekennzeichnet, daß** bei der Aufnahme der Stützpunkte für die Parameterschätzung ein Gütetest durchgeführt wird, wobei die Abweichung des tatsächlichen Signals zum geforderten sinusförmigen Signal festgestellt wird und, wenn die Abweichung zu groß ist, wird der Meßwert verworfen und die nächste Zielfrequenz liegt dann um einen vorgegebenen Wert, beispielsweise 1Hz, unter der aktuellen Frequenz, während, wenn die Güte des Signals ausreichend ist, in kleineren Schritten, beispielsweise 0,5 Hz, weiter abgetastet wird.

36. Verfahren nach einem der vorhergehenden Ansprüche, **dadurch gekennzeichnet, daß,** wenn der Amplitudengang in Druck- und Zugstufenrichtung sein Maximum überschreitet, der dann angenommene Resonanzbereich erneut in kleiner Frequenzschritten, beispielsweise 0,25-Hz Schritten, abgetastet wird, um die tatsächliche Resonanzfrequenz mit der geforderten Auflösung zu erkennen.

37. Verfahren nach einem der vorhergehenden Ansprüche, **dadurch gekennzeichnet, daß,** wenn der Amplitudengang seinen Wendepunkt überschreitet, der dann angenommene Resonanzbereich in kleinen Frequenzschritten, beispielsweise 0,25-Hz Schritten, abgetastet wird, um die tatsächliche Resonanzfrequenz mit der geforderten Auflösung zu erkennen

38. Verfahren nach einem der vorhergehenden Ansprüche, **dadurch gekennzeichnet, daß** zur Aufnahme der $\pi/2$-Frequenz $f_2$ die Schrittweite der Abtastung auf einen kleinen Wert, beispielsweise 0,25 Hz, herabgesetzt wird, wenn ein vorgegebener Phasenwert, beispielsweise 1,2 rad, erreicht wird, und daß die Schrittweite auf einen kleineren Wert, beispielsweise 0,1 Hz, reduziert wird, wenn der Phasenwert einen größeren Wert, beispielsweise 1,4 rad, erreicht.

39. Verfahren nach einem der vorhergehenden Ansprüche, **dadurch gekennzeichnet, daß** bei der Aufnahme des Frequenzganges folgende Schritte in der genannten Reihenfolge durchgeführt werden:

- Messung des statischen Gewichts;
- Anfahren der Startfrequenz von beispielsweise 10 Hz;
- Durchführung einer Erwärmungsphase des Stoßdämpfers;
- Hochfahren der Erregerschwingung der Schwingplatte auf die Maximalfrequenz von beispielsweise 35 Hz;
- Aufnehmen der Stützpunkte für die Parameterschätzung;
- Aufnehmen der Resonanzfrequenz $f_3$;
- Aufnehmen der $\pi/2$ Frequenz $f_2$ und
- Übersenden der Daten an die Auswertung.

40. Verfahren nach einem der vorhergehenden Ansprüche, **dadurch gekennzeichnet, daß** zum Aufnehmen der Frequenzpunkte folgende Schritte in der angegebenen Reihenfolge durchgeführt werden:

- Anfahren der Zielfrequenz;
- Überprüfung, ob die Frequenz sich stabilisiert;
- Aufnehmen der Meßwerte;
- Trennung von Zug- und Druckstufensignal;
- Digitale Filterung, vorzugsweise Fourier-Transformation, der getrennten Signale;
- Gütebewertung der Signale;
- Überprüfung der Bodenhaftung;
- Überprüfung, ob die Messungen über eine gegebene Anzahl von Umdrehungen aufgenommen worden sind;
- Überprüfung, ob die Messungen bei wenigstens einem Teil der Umdrehungen die Gütenorm erfüllen;
- Mittelwertbildung der als gut klassifizierten Messungen;
- Kompensation des Einflusses der Schwingplatte.

41. Verfahren nach einem der vorhergehenden Ansprüche, **dadurch gekennzeichnet, daß** zur Auswertung der Meßergebnisse folgende Schritte in der angegebenen Reihenfolge durchgeführt werden:

- Überprüfung, ob die Bodenhaftung innerhalb vorgegebener Toleranzgrenzen liegt;
- Extrahieren der charakteristischen Frequenzen;
- Parameterschätzung in Bezug auf die Berechnung von $k_R$, der Federkonstanten des Reifens;
- Überprüfung des Luftdrucks des Reifens;
- Überprüfung der Signalform des Amplitudenspektrums;
- Überprüfung, ob der Phasengang $\pi/2$ erreicht;
- Überprüfung, ob die Gleichung $f_2 = f_3$ gilt;
- Parameterberechnung;
- Überprüfung, ob die Parameter berechenbar sind;
- Berechnung des Achs-Dämpfungsgrades;
- Berechnung der Kennlinie der Grenzwertdämpfung; und
- Beurteilung des Achsdämpfungsgrades und Ausgabe einer Empfehlung über die Notwendigkeit des Stoßdämpferaustausches.

42. Vorrichtung zur Durchführung des Verfahrens zum Prüfen von am Fahrzeug eingebauten Stoßdämpfern nach einem der vorhergehenden Ansprüche, mit einer Schwingplatte, auf der das Kraftfahrzeug mit einem Rad steht und die mit einer geeigneten Amplitude und einer variablen Frequenz in vertikaler Richtung hin- und herbewegbar ist und eine Schwingung auf das Rad ausübt, wobei die Dämpfung des Stoßdämpfers aus der Kraftantwort des Fahrwerkes auf die Schwingungen der Schwenkplatte und der relativen Phasenfunktion zwischen der von der Schwingplatte ausgeübten Kraft in der Bewegung der Schwingplatte erhalten wird, **gekennzeichnet durch** Scherkraftsensoren an der Schwingplatte und einen Impulsgeber für die winkeläquidistante Abtastung, und **durch** eine Einrichtung, **durch** die das Meßsignal in ein Druckstufensignal und ein Zugstufensignal aufgetrennt wird, und **durch** eine Einrichtung, um das Druckstufensignal und das Zugstufensignal getrennt der Einrichtung für die Weiterverarbeitung der Signale zuzuführen.

**43.** Vorrichtung nach Anspruch 42, **dadurch gekennzeichnet, daß** die Auswertungs-Einrichtung die Qualität des eingebauten Stoßdämpfers über den Achs-Dämpfungsgrad im Bezug auf den Quotienten der gefederten Masse zu der ungefederten Masse beurteilt, wobei die Meßwerte des Achs-Dämpfungsgrades zu einer Kennlinie eines Grenzwert-Dämpfungsgrades in Beziehung gesetzt werden, die den Bereich nicht-akzeptabler Achs-Dämpfungsgrade begrenzt.

**Claims**

**1.** A method for testing shock absorbers mounted to a vehicle, wherein from an oszillating plate on which the vehicle stands with one wheel and which is reciprocingly movable in vertical direction with a suitable amplitude and variable frequency, an oszillation is applied to the wheel, wherein the damping of the shock absorber is obtained from the force response of the chassis to the oszillations of the oszillating plate and the relative phase function between the force exerted by the oszillating plate and the movement of the oszillating plate, wherein the processed measuring signal, which represents the force response of the shock absorber, is subjected to the evaluation,
**characterized in that**
as evaluation basis for the quality of the mounted shock absorber the axle damping ratio relating to the quotient of the sprung mass to the unsprung mass is calculated, wherein the measured values of the axle damping ratio are set in relation to a characteristic curve of a limiting value damping ratio, which limits the range of non acceptable axle damping ratios.

**2.** The method according to claim 1, **characterized in that** prior to the actual evaluation the road adherence of the vehicle during the measurement is checked and **in that**, if the road adherence falls below an predetermined value, the evaluation is terminated and the shock absorber is classified as insufficient.

**3.** The method according to claim 1, **characterized in that** the measuring signal is separated by pull-pressure-stage-separation in a pressure-stage signal, which is characteristic for the pressure stage of the shock absorber, and a pull-stage signal, which is characteristic for the pull-stage of the shock absorber, and **in that** the pressure-stage signal and the pull-stage signal are evaluated separately with respect to the axle damping ratio.

**4.** The method according to one of the preceding claims, **characterized in that** for the extraction of the characterizing frequency the measured spectra of amplitude and phase are cleared up by interpolating the curve portion of the phase progression by a polynom.

**5.** The method according to claim 4, **characterized in that** the interpolation points of the interpolation start with the resonant frequency and end at the local maximum of the phase progression.

**6.** The method according to claim 4, **characterized in that** the frequencies $f_2$ and $f_3$ are subjected to a test of plausibility, wherein the shock absorber is classified as good, when the $\pi/2$-Frequency $f_2$ does not exist and is classified as bad, if the $\pi/2$-frequency is greater than or equal to the resonant frequency $f_3$.

**7.** The method according to claims 1 to 4, **characterized in that** a parameter calculation is carried out based on the complex frequency response of the simple ¼ vehicle model:

$$F_P = \frac{-m_S\omega^2 - im_S \frac{d}{k}\omega^3 + \frac{m_U \cdot m_F}{k}\omega^4}{1 + i\frac{d}{k}\omega - (\frac{m_F}{k} + \frac{m_F}{k_R} + \frac{m_U}{k_R})\omega^2 - im_S\frac{d}{k \cdot k_R}\omega^3 + \frac{m_U \cdot m_F}{k \cdot k_R}\omega^4}$$

wherein

$m_F$ sprung mass [kg]
$m_U$ unsprung mass [kg]
$m_S$ static total mass [kg]
k spring constant of the suspension spring [N/m]
$k_R$ spring constant of the tire [N/m]

d damping constant of the shock absorber [kg/s]
ω angular frequency of the excitation oszillation [1/s]

and **in that** from the parameters the axle damping ratio

$$Achs_{DG} = \frac{d}{2*\sqrt{(k+k_R)*m_U}}$$

is determined, wherein the herein used parameters are a result of the model iteration.

8. The method according to claim 7, **characterized in that** a loss function

$$V = \sum_{v=0}^{N} \psi_v [R_v(1 - a_2\omega^2 + a_4\omega^4) - I_v(a_1\omega - a_3\omega^3) - (b_0 - b_2\omega^2 + b_4\omega^4)]^2$$

$$+ \psi_v [R_v(a_1\omega - a_3\omega^3) + I_v(1 - a_2\omega^2 + a_4\omega^4) - (b_1\omega - b_3\omega^3)]^2$$

is used for the parameter estimation of the value $k_R$, which calculates the deviation of all interpolation points for the complex frequency response to be estimated, wherein

$R_v$ is the measured real component of interpolation point $v$
$I_v$ is the measured imaginary component of interpolation point $v$
$\psi_v$ is the weight function of interpolation point $v$
N is the number of interpolation points-1

and the loss function is differentiated on every coefficient to be estimated and set to zero, wherein the asymptote of the convergent progression of the amplitude spectrum against the spring constant of the tire $k_R$ is calculatable for large frequencies by a modified form of the method for estimating the parameters, in which out of the original nine parameters to be estimated the parameters $b_0$ and $b_1$ are basically zero and the parameter $b_2$ is the also known static mass $m_S$, such that the linear system of equations is reduced to six linear equations.

9. The method according to claim 8, **characterized in that** during the estimation a plurality, for example 20, different weighting functions are run through, that for each weighting function the theoretical interpolation points are then calculated and that a weighting function with the lowest mean deviation in the used interpolation points is then used.

10. The method according to claim 8 or 9, **characterized in that** after the parameter estimation of parameter $k_R$ this value is compared to a reference-$k_R$-curve in the $k_R$-mS-area and the measurement is not analyzed if the estimated $k_R$ value lies outside a predetermined band of tolerance.

11. The method according to claim 7, **characterized in that** the form of the signal of the frequency response is checked and that measurements which are characteristic for the break down of static friction and measurements which provide a frequency response with no definite resonance maximum of the amplitude spectrum are discarded.

12. The method according to claim 7, **characterized in that** a frequency response which does not comprise a local minimum between the characterizing frequencies $f_2$ and $f_3$ is approved for the further calculation of parameters.

13. The method according to claim 7, **characterized in that** for the calculation of the parameters the following calculation steps are carried out with a computer algebra:

- calculate the amplitude response A from the complex frequency response $F_P$;
- for the calculation of the characteristic equation for the upper point of resonance $f_3$ differentiate the amplitude response A and set A' to zero;
- resolve this equation to the damping constant d and it holds:

$$d_3 = g(\omega_3, m_S, m_U, k_R, k).$$

- for the calculation of the characteristic equation for the $\pi/2$-frequency $f_2$ calculate the real component from A and set $A_{re}$ to zero;
- resolve this equation to the damping constant d and it holds:

$$d_2 = h\,(\omega_2, m_S, m_U, k_R, k);$$

wherein

in both equations the excitation frequencies $\omega$ and the static weight $m_s$ are measured, the spring constant of the tire $k_R$ is known from the parameter estimation method, such that two equations for $d_2$ and $d_3$ with two unknown quantities $m_U$ und $k_R$ remain;
- generate the amplitude responses $A_2$, wherein d is replaced by $d_2$, and $A_3$, wherein d is replaced by $d_3$, wherein moreover two equations with two unknown quantitites mu and k are obtained, which are linked for the calculation of the parameters.

14. The method according to claim 7, **characterized in that** due to the low influence of the spring constant k on the axle damping ratio, the spring constant k is neglected so that for the axle damping ratio results:

$$Achs_{DG} = \frac{d}{2*\sqrt{k_R * m_U}}$$

wherein the model iteration can be much simplified and thus accelerated in time, as the curve of solution for the characteristic resonant frequency $f_1$ is replaced by a constant line at k = 10000N/m, wherein the corresponding unsprung mass is calculated by the usual iteration algorithm which provides the solution point ($m_U$, 10000) with the lowest deviation of the measured values and the best covering of the damping constant of the remaining solution curves $f_3$.

15. The method according to claim 7, **characterized in that** if the parameters cannot be calculated the road adherence is checked and **in that** if a big road adherence is determined the shock absorber is classified as good while in the other case the evaluation is stopped and the shock absorber is classified as insufficient.

16. The method according to claim 7, **characterized in that** for the determination of the limiting values' line vehicles with manipulated shock absorbers are measured, wherein the axle damping ratios of the defect shock absorbers are used as benchmark data.

17. The method according to claim 16, **characterized in that** the limiting values' line comprises a hyperbolic course with the minimum justifiable mass ratio as pole point on the one hand and with the minimum axle damping ratio as asymptote on the other hand.

18. The method according to claim 16 or 17, **characterized in that** the limiting values' line is illustrated by a non-linear regression over the used benchmark data wherein as model for regression a growth model is used which has a strictly monotone asymptotic course and coincides with the measurements which have been conducted before.

19. The method according to claim 18, **characterized in that** as a model a so called saturation model is used wherein the limiting values' line is to be described by the two parameters a and b:

$$Achs_{DGgrenz} = \frac{a*\,{}^{m_F}\!/_{m_U}}{b+{}^{m_F}\!/_{m_U}}$$

wherein

a is the asymptote, i.e. the minimum axle damping ratio.
b is the pole point, i.e. the physically minimum justifiable mass ratio.

20. The method according to claim 14, **characterized in that** after the calculation of the axle damping ratio and its placement in the diagram of axle damping ratio to the quotient of the sprung mass to the unsprung mass a recommendation is given as regards the necessity of a change of the shock absorber.

21. The method according to claim 1, **characterized in that** the measuring signal, which represents the temporary course of the force response at a target frequency, is separated by a pull-pressure-stage-separation in a pressure-stage signal which is characteristic for the pressure-stage of the shock absorber and a pull-stage signal, which is characteristic for the pull-stage of the shock absorber and that the pressure-stage signal and the pull-stage signal are separately supplied for the further processing.

22. The method according to claim 21, **characterized in that** the pull-pressure-stage-separation is carried out based on a frequency separation, wherein the fundamental frequency is maintained and the measuring values during the period $\pi/2$ are assigned to the positive half cycle of the pessure stage and the measuring values of the negative half cycle during the period $\pi/2$ are assigned to the pull-stage.

23. The method according to claim 21, **characterized in that** the pull-pressure-stage-separation is carried out based on the amplitude separation, wherein the higher fundamental frequency of the pressure stage and the lower frequency of the pull stage are accounted for in the calculation of the amplitude **in that** the narrower positive pressure stage half cycle is shifted to the right by $\delta\varphi$ while the broader negative pull stage half cycle is shifted to the left by $\delta\varphi$.

24. The method according to claim 22, **characterized in that** the signals obtained by frequency separation are subjected to a digital filtering, preferably a Fourier-Transformation and more preferably to a fast Fourier-Transformation.

25. The method according to claim 23, **characterized in that** the signals obtained by amplitude separation are subjected to a digital filtering, preferably to a Fourier-Transformation and more preferably to a fast Fourier-Transformation and the phase shifts $\delta\varphi$ are added.

26. The method according to claim 24 or 25, **characterized in that** in the fast Fourier-Transformation only the fundamental oscillation is filtered out.

27. The method according to one of the preceding claims, **characterized in that that** after the digital filtering a rating of quality of the processed signal from sinus constancy is carried out wherein for each measured value the relative deviation to the sinus signal, which represents the ideal filtered value, is calculated, the cross-sum of all deviations is formed, and measurement points are discarded if their mean deviation of the ideal filtered value exceeds a predetermined value, preferably 5%.

28. The method according to one of the preceding claims, **characterized in that** the road adherence, i.e. the contact of the wheel with the oscillating plate is checked and that the measurement is stopped if the road adherence is lower than a predetermined value, preferably 10%.

29. The method according to one of the preceding claims, **characterized in that** three complete circulations are measured wherein n measured values, preferably 256 measured values are recorded for each rotation and that multiple rotations, preferably three rotations, are recorded and are subjected to the formation of a mean value.

30. The method according to one of the preceding claims, **characterized in that** the influence of the oscillating plate to the result of the measurement is compensated by recording the frequency response of the oscillating plate in a dynamical calibration cycle and the amplitude spectrum is interpolated by a branch of a parabola.

31. The method according to one of the preceding claims, **characterized in that** the recording of the measuring values is started only when after reaching a frequency point the variations of frequency do not exceed a predetermined tolerance anymore.

32. The method according to one of the preceding claims, **characterized in that** the frequency points in which the frequency variations cannot be stabilized are discarded.

33. The method according to one of the preceding claims, **characterized in that** before the real measurement cycle a warming phase for the shock absorbers is provided in order to bring the shock absorber to a predetermined temperature in the measurement.

34. The method according to claim 33, **characterized in that** in the warming phase the shock absorber is moved in the neighborhood of the upper resonant frequency in order to warm the shock absorber liquid.

35. The method according to one of the preceding claims, **characterized in that** a quality test is carried out during the recording of the interpolation values for the estimation of the parameters, wherein the deviation of the real signal from the required sinus formed signal is determined and, if the deviation is too great, the measured value is discarded and the next target frequency then lies around a predetermined value, e.g. 1 Hz, below the current frequency, while when a quality of the signal is sufficient it is continued to scan in small steps, e.g. 0,5 Hz.

36. The method according to one of the preceding claims, **characterized in that** if the amplitude response in pressure- and pull stage direction exceeds its maximum, the then assumed area of resonance is scanned again in smaller frequency steps, e.g. 0,25 Hz steps, in order to identify the real resonant frequency with the required resolution.

37. The method according to one of the preceding claims, **characterized in that** if the amplitude characteristics exceeds its turning point the then assumed area of resonance is scanned in small frequency steps, e.g. 0,25 Hz steps, in order to recognize the real resonant frequency with the required resolution.

38. The method according to one of the preceding claims, **characterized in that** for recording the $\pi/2$ - frequency $f_2$ the increment of the scanning is reduced to a small value, e.g. 0,25 Hz if a predetermined phase value, e.g. 1,2 rad, is reached and that the increment is reduced to a smaller value, e.g. 0,1 Hz if the phase value reaches a greater value, e.g. 1,4 rad.

39. The method according to one of the preceding claims, **characterized in that** in the recording of the frequency response the following steps are carried out in the mentioned order:

- measurement of the static weight;
- starting up the start frequency of e.g. 10 Hz;
- execution of a warming phase of the shock absorber;
- increasing the excitation frequency of the oscillating plate to a maximum frequency of e.g. 35 Hz;
- recording of the interpolation values for the estimation of the parameters;
- recording of the resonant frequency $f_3$;
- recording of the $\pi/2$ frequency $f_2$; and
- forwarding the data to the evaluation.

40. The method according to one of preceding claims, **characterized in that** for the recording of the frequency points the following steps are carried out in the mentioned order:

- starting up the target frequency;
- checking if the frequency has stabilized;
- recording of the measuring values;
- separation of pull- and pressure-stage signal;
- digital filtering, preferably Fourier-Transformation, of the separated signals;
- rating of the quality of the signals;
- checking of the road adherence;
- checking if the measurements have been recorded over a given number of rotations;
- checking if the measurements of at least part of the rotations fulfill the quality norm;
- forming the mean value of the measurements classified as good;
- compensation of the influence of the oscillating plate.

41. The method according to one of the preceding claims, **characterized in that** for the evaluation of the results of the measurements the following steps are carried out in the mentioned order:

- checking if the road adherence lies inside the predetermined limits of tolerance;
- extraction of the characterizing frequencies;
- estimation of the parameters concerning the calculation of $k_R$, the spring constant of the tire;
- checking the air compression of the tire;
- checking the signal form of the amplitude spectrum;
- checking if the phase response reaches $\pi/2$;
- checking if the equation $f_2 = f_3$ holds;
- calculation of the parameters;
- checking if the parameters are calculable;
- calculation of the axle damping ratio;
- calculation of the characteristic curve of the limiting value damping; and
- evaluation of the axle damping ratio and output of a recommendation as regards the necessity to change the shock absorber.

**42.** An apparatus for executing the method for testing shock absorbers mounted to a vehicle according to one of the preceding claims, with a oscillating plate, on which the vehicle stands with one wheel and which is reciprocingly movable in vertical direction with a suitable amplitude and a variable frequency and which applies an oscillation to the wheel, wherein the damping of the shock absorber is obtained from the force response of the chassis to the oscillations of the oscillating plate and the relative phase function between the force applied by the oscillting plate and the movement of the oscillating plate, **characterized by** sheering force sensors at the oscillating plate and a pulse generator for the scanning with equidistant angles and by a device by which the measuring signal is separated into a pressure stage signal and a pull stage signal and by a device to provide the pressure stage signal and the pull stage signal separately to the device for further processing of the signals.

**43.** The apparatus according to claim 42, **characterized in that** the evaluation device judges the quality of the mounted shock absorber by the axle damping ratio in relation to the quotient of the sprung mass to the unsprung mass, wherein the measuring values of the axle damping ratio are set in relation to a characterizing curve of a limiting value damping ratio, which limits the area of non acceptable axle damping ratios.

**Revendications**

**1.** Procédé pour la vérification des amortisseurs montés sur le véhicule, par le fait que d'une plaque oscillante, sur laquelle le véhicule, plus exactement une roue du véhicule, s'appuie et dont on peut imprimer verticalement un mouvement aller et retour avec une amplitude modérée et une fréquence variable une oscillation est transmise, là où l'amortissement de l'élément d'amortissement est déduit de la réponse dynamique du système de roulage aux oscillations de la plaque oscillante et de la fonction de phase relative entre la force exercée par la plaque oscillante et le mouvement de la plaque oscillante, où le signal de mesure obtenu, représentant la réponse dynamique de l'amortisseur, est soumis à l'interprétation, **caractérisé en ce que** pour base d'appréciation de la qualité de l'élément d'amortissement monté sur le véhicule on calcule le degré d'amortissement axial par rapport au résultat de la division entre la masse amortie et la masse non amortie, où les dates du mesurage pour le degré d'amortissement axial sont mises en corrélation avec une caractéristique d'un degré d'amortissement axial limite, qui délimite le domaine des degrés d'amortissement axiales inacceptables.

**2.** Procédé selon la revendication 1, **caractérisé en ce que** avant l'interprétation comme telle, on examine l'adhérence du véhicule au sol pendant les mesurages et par le fait que, dans le cas où l'adhérence au sol aurait une valeur plus petite qu'une valeur minime établie, le mesurage sera arrêté et les amortisseurs seront classifiés comme inacceptables.

**3.** Procédé selon la revendication 1, **caractérisé en ce que** le signal de mesurage est décomposé moyennant une séparation extension compression dans un signal de degrés de compression, caractéristique pour le degré de compression de l'amortisseur, et un signal de degrés d'extension, caractéristique pour le degré d'extension de l'amortisseur et par le fait que le signal de degrés de compression et le signal de degrés d'extension seront interprétés séparément par rapport au degré d'amortissement axial.

**4.** Procédé selon a l'une des revendications antérieures, **caractérisé en ce que** en vue de l'extraction de la fréquence caractéristique, les spectres d'amplitude et de fréquences mesurées seront lissés par l'interpolation du segment de courbe de la phase avec un polynôme.

**5.** Procédé selon la revendication 4, **caractérisé en ce que** les points d'appui pour l'interpolation commencent à la fréquence de résonance et finissent au maximum local du parcours de la phase.

**6.** Procédé selon la revendication 4, **caractérisé en ce que** les fréquences $f_2$ et $f_3$ sont soumises à un test de plausibilité, où l'amortisseur est classifié comme bon, si la fréquence $\pi/2$ appelée $f_2$, n'existe pas et où il est classifié comme inacceptable, si la fréquence $\pi/2$, appelée $f_2$, est plus grande ou se trouve en rapport d'égalité avec la fréquence de résonance $f_3$.

**7.** Procédé selon la revendication 1 jusqu'à la revendication 4, **caractérisé en ce que** un calcule paramétrique est exécuté, étant fondé sur le parcours de fréquence complexe du modèle simple de ¼ - véhicule:

$$F_P = \frac{-m_S\omega^2 - im_S\frac{d}{k}\omega^3 + \frac{m_U \cdot m_F}{k}\omega^4}{1 + i\frac{d}{k}\omega - (\frac{m_F}{k} + \frac{m_F}{k_R} + \frac{m_U}{k_R})\omega^2 - im_S\frac{d}{k\cdot k_R}\omega^3 + \frac{m_U\cdot m_F}{k\cdot k_R}\omega^4}$$

où

> $m_F$ est la masse amortie [kg]
> $m_U$ est la masse non amortie [kg]
> $m_S$ est la masse statique totale [kg]
> k est la constante élastique de l'arc de suspension [N/m]
> $k_R$ est la constante élastique du pneu [N/m]
> d est la constante d'amortissement de l'amortisseur [kg/s]
> $\omega$ est la fréquence angulaire de l'oscillation excitatrice [1/s]

et par le fait que les paramètres mènent a déterminer le degré d'amortissement axial:

$$Achs_{DG} = \frac{d}{2 * \sqrt{(k + k_R) * m_U}}$$

où les paramètres employés sont le résultat de l'itération de modèle.

**8.** Procédé selon la revendication 7, **caractérisé en ce que** pour l'évaluation paramétrique de la valeur $k_R$ une fonction de pertes est utilisée:

$$V = \sum_{v=0}^{N} \psi_v[R_v(1 - a_2\omega^2 + a_4\omega^4) - I_v(a_1\omega - a_3\omega^3) - (b_0 - b_2\omega^2 + b_4\omega^4)]^2$$
$$+ \psi_v[R_v(a_1\omega - a_3\omega^3) + I_v(1 - a_2\omega^2 + a_4\omega^4) - (b_1\omega - b_3\omega^3)]^2$$

qui offre la déviation de tous les points d'appui pour la fonction complexe de la fréquence à évaluer, où

> $R_v$ est la partie réelle mesurée du point d'appui v
> $I_v$ est la partie imaginaire mesurée du point d'appui v
> $\Psi_v$ est la fonction de poids du point d'appui v
> N est le numéro de points d'appui - 1

et où la fonction de pertes varie selon chaque coefficient à évaluer et s'annule, là où l'asymptote du parcours convergent du spectre de l'amplitude vers la constante élastique du pneu $k_R$ pour des fréquences plus grandes peut être calculée moyennant une forme modifiée du procédé d'évaluation paramétrique, où des neufs paramètres qui devait être calculés initialement, les paramètres $b_0$ et $b_1$ sont en principe zéro et le paramètre $b_2$ est la masse $m_S$ statique qui est aussi connue, de sorte que le système d'équations linéaires est réduit à six équations linéaires.

**9.** Procédé selon la revendication 8, **caractérisé en ce que** l'évaluation implique la réalisation d'une pluralité de fonctions de poids différentes, par exemple 20, et que pour chaque fonction de poids on calcule les points d'appui théorétiques et qu'après cela, on emploie la fonction de poids **caractérisée par** la plus petite déviation moyenne dans les points d'appui employés.

**10.** Procédé selon la revendication 8 ou 9, **caractérisé en ce que** après l'évaluation paramétrique du paramètre $k_R$ cette valeur est comparée dans le domaine $k_R$- mS à une courbe standard $k_R$ et que le mesurage n'est pas employé, si la valeur évaluée pour $k_R$ se situe en dehors d'une bande de tolérance donnée.

**11.** Procédé selon la revendication 7, **caractérisé en ce que** l'analyse de la forme de signal du parcours de la fréquence et par l'élimination des mesurages caractéristiques pour une disparition du frottement d'adhérence et des mesurages qui ne présentent pas un maximum de résonance univoque du spectre d'amplitudes.

**12.** Procédé selon la revendication 7, **caractérisé en ce que** un parcours de la fréquence, qui ne présente aucun maximum local entre les fréquences caractéristiques $f_2$ et $f_3$, est pris en considération en vue du calcul paramétrique ultérieur.

**13.** Procédé selon la revendication 7, **caractérisé en ce que** le calcul paramétrique exige la réalisation des étapes suivantes moyennant une algèbre réalisée par l'intermédiaire de l'ordinateur:

- calcule le parcours de l'amplitude A du parcours de fréquence $F_p$;
- pour calculer l'équation caractéristique pour le point de résonance supérieur $f_3$ calcule la dérivée du parcours de l'amplitude A et mets A' égale zéro;
- résous cette équation après la constante d'amortissement d et cela donnera:

$$d_3 = g(\omega_3, m_S, m_U, k_R, k),$$

- pour calculer l'équation caractéristique pour la fréquence de $\pi/2$, $f_2$, calcule la partie réelle de A et mets $A_{re}$ égale zéro;
- résous cette équation après la constante d'amortissement d et ça donnera:

$$d_2 = h(\omega_2, m_S, m_U, k_R, k)$$

où dans les deux équations g et h, les fréquences excitatrices $\omega$ et le poids statique $m_S$ sont mesurés, la constante élastique du pneu $k_R$ étant connue du procédé d'évaluation paramétrique, de sorte que restent deux équations pour $d_2$ et $d_3$ à deux inconnues $m_U$ et $k_R$;
- génère le parcours des amplitudes $A_2$, où A sera remplacé par $d_2$, et $A_3$, où d sera remplacé par $d_3$, engendrant deux équations à deux inconnues $m_U$ et k, qui seront en liaison avec celles antérieures pour le calcul des paramètres.

**14.** Procédé selon la revendication 7, **caractérisé en que** sur le fond de l'influence mineure de la constante élastique k sur le degré d'amortissement axial, la constante élastique k est négligée, de telle façon qu'on obtient pour le degré d'amortissement axial:

$$Achs_{DG} = \frac{d}{2 * \sqrt{k_R * m_U}}$$

où l'itération de modèle devient considérablement plus simple et peut être accélérée, car la courbe de la solution pour la fréquence de résonance caractéristique $f_1$ est remplacée par une droite constante, c'est-à-dire k= 10000 N/m, où la masse non pas amortie respective est calculée moyennant l'algorithme usuel d'itération, qui offre le point solution ($m_U$, 10000) avec la déviation la plus petite de la valeur mesurée et avec la meilleure superposition de la constante d'amortissement sur les courbes rémanentes pour $f_3$.

**15.** Procédé selon la revendication 7, **caractérisé en ce que** si les paramètres ne peuvent pas être calculés, l'adhérence au sol est calculée et dans le cas où une grande adhérence au sol serait constatée, l'amortisseur sera classifié comme bon, tandis que dans l'autre cas la résolution sera arrêtée et l'amortisseur sera classifié comme inadéquat.

**16.** Procédé selon la revendication 7, **caractérisé en ce que** la détermination d'une ligne de la valeur limite est réalisée moyennant l'emploi dans les mesurages de véhicules aux amortisseurs manipulés, où les degrés d'amortissement axiales des amortisseurs ayant des défauts sont employés comme des dates de référence.

**17.** Procédé selon la revendication 16, **caractérisé en ce que** la ligne de la valeur limite a un parcours hyperbolique, ayant comme pole d'un côté le rapport minimal de masse acceptable et de l'autre côté le degré d'amortissement axial minimal comme asymptote.

**18.** Procédé selon la revendication 16 ou 17, **caractérisé en ce que** la ligne de la valeur limite est représentée par une régression non linéaire au dessus des dates de référence employées, où on utilise en tant que modèle de régression un modèle d'accroissement, qui a un parcours strictement monotone et asymptotique et qui se superpose aux mesurages antérieures.

**19.** Procédé selon la revendication 18, **caractérisé en ce que** on utilise comme modèle ce qu'on appelle modèle de saturation, où la ligne de la valeur limite est décrite par l'entremise des paramètres a et b:

$$Achs_{D\ddot{a}mprme} = \frac{a * {}^{m_f}\!/_{m_u}}{b + {}^{m_f}\!/_{m_u}}$$

où

- a est l'asymptote, c'est-à-dire le degré d'amortissement axial minimum,
- b est le pole, c'est-à-dire le rapport de masses minimal physiquement acceptable.

**20.** Procédé selon la revendication 14, **caractérisé en ce que** par suite du calcul du degré d'amortissement axial et de son encadrement dans le diagramme du degré d'amortissement axial rapporté au résultat de la division entre la masse amortie et la masse non amortie une recommandation est émise concernant le besoin de changer l'amortisseur.

**21.** Procédé selon la revendication 1, **caractérisé en ce que** le signal de mesure, qui représente l'évolution de la réponse dynamique à une fréquence visée, est décomposé moyennant une séparation de degrés d'extension compression dans un signal comprenant des degrés de compression, caractéristique pour le degré de compression de l'amortisseur et un signal comprenant des degrés d'extension, caractéristique pour le degré d'extension de l'amortisseur, et par le fait que le signal **caractérisé par** des degrés de compression et le signal **caractérisé par** des degrés d'extension seront ultérieurement traites séparément.

**22.** Procédé selon la revendication 14, **caractérisé en ce que** la séparation des degrés de compression extension est exécutée sur le fond d'une séparation des fréquences, où la fréquence fondamentale est conservée et les valeurs mesurées pendant $\pi/2$ de la semi onde positive sont associées au degré de compression, et les valeurs mesurées pendant $\pi/2$ de la semi onde négative sont associées au degré d'extension.

**23.** Procédé selon la revendication 21, **caractérisé en ce que** la séparation des degrés d'extension compression est exécutée sur le fond de la séparation d'amplitude, où la fréquence fondamentale plus haute du degré de compression et la fréquence plus basse du degré d'extension sont prises en considération pour calculer l'amplitude, par le fait que la semi onde du degré de compression positive plus étroite est déplacée $\delta\varphi$ à droite et la semi onde du degré d'extension négative plus large est déplacée $\delta\varphi$ à gauche.

**24.** Procédé selon la revendication 22, **caractérisé en ce que** les signaux obtenus par la séparation des fréquences sont soumis à un filtrage digital, préférablement à une transformation Fourier et préférablement notamment à une transformation Presque-Fourier.

**25.** Procédé selon la revendication 23, **caractérisé en ce que** les signaux obtenus sur le fond de la séparation d'amplitudes sont soumis à un filtrage digital, préférablement à une transformation Fourier et préférablement notamment à une transformation Presque Fourier, ce qui est suivi par l'addition des déphasages $\delta\varphi$.

26. Procédé selon la revendication 24 ou 25, **caractérisé en ce que** pour ce qui est de la transformation Fourier seule l'oscillation fondamentale est extraite par filtrage.

27. Procédé selon à l'une des revendications antérieures, **caractérisé en ce que** le filtrage digital est suivi d'une estimation de la qualité du signal relativement traité sur le fond de la superposition avec la fonction sinus, où chaque valeur mesurée impose le calcul de la déviation relative par rapport au signal sinusoïdal, qui représente la valeur filtrée idéale, la somme de tous les déviations et l'élimination de points de mesurage, dont la déviation moyenne par rapport à la valeur filtrée idéale dépasse une valeur donnée, préférablement 5%.

28. Procédé selon à l'une des revendications antérieures, **caractérisé en ce que** l'adhésion au sol, c'est-à-dire le contact de la roue avec la plaque oscillante, est analysée et que dans le cas d'une adhésion dont la valeur est plus petite qu'une valeur donnée, préférablement 10% plus petite, les mesurages sont arrêtés.

29. Procédé selon à l'une des revendications antérieures, **caractérisé en ce que** le mesurage de trois cycles complets, où n valeurs mesurées, préférablement 256 valeurs, sont enregistrées par cycle, et par l'enregistrement de plusieurs cycles, préférablement trois cycles, qui seront soumis à la médiation.

30. Procédé selon à l'une des revendications antérieures, **caractérisé en ce que** l'influence de la plaque oscillante sur le résultat est compensée, le cycle dynamique de calibrage étant **caractérisé par** l'enregistrement du parcours de la fréquence de la plaque oscillante et par l'interpolation du spectre d'amplitudes moyennant un arc de parabole.

31. Procédé selon à l'une des revendications antérieures, **caractérisé en ce que** l'enregistrement des mesurages n'est déclanché qu'au moment où les oscillations de la fréquence pour un point de fréquence ne dépassent plus un espace de tolérance donné.

32. Procédé selon à l'une des revendications antérieures, **caractérisé en ce que** l'élimination des points de référence où les oscillations de la fréquence ne se stabilisent pas.

33. Procédé selon à l'une des revendications antérieures, **caractérisé en ce que** le processus de mesurage est précédé par une phase de chauffage de l'amortisseur dans le but d'assurer pour l'amortisseur une température préétablie de mesurage.

34. Procédé selon la revendication 33, **caractérisé en ce que** dans la phase du chauffage, l'amortisseur est déplacé dans le voisinage de la fréquence de résonance supérieure, afin de chauffer le liquide d'amortissement.

35. Procédé selon à l'une des revendications antérieures, **caractérisé en ce que** lors de l'enregistrement des points d'appui pour l'évaluation paramétrique, un test de qualité est effectué, pour déterminer la déviation du signal obtenu du signal sinusoïdal demandé et, si la déviation a une valeur trop grande, le mesurage est éliminé et la fréquence visée suivante est trouvée en employant une valeur donnée, qui est par exemple 1 Hz plus petite, que la fréquence actuelle, et quand la qualité du signal est correspondante, les mesurages sont continués moyennant de petits pas, par exemple de 0,5 Hz.

36. Procédé selon à l'une des revendications antérieures **caractérisé en ce que** au moment où le parcours de l'amplitude dépasse son maximum dans la direction des degrés de compression et d'extension, le domaine de résonance considéré sera exploré de nouveau moyennant de petits pas de fréquence, par exemple de 0,25 Hz, afin de déterminer la fréquence de résonance réelle avec la résolution sollicitée.

37. Procédé selon à l'une des revendications antérieures, **caractérisé en ce que** au moment où le parcours de l'amplitude dépasse son point d'inflexion, le domaine de résonance considéré sera exploré de nouveau moyennant de petits pas, par exemple de 0,25 Hz, afin de déterminer la fréquence de résonance réelle avec la résolution sollicitée.

38. Procédé selon à l'une des revendications antérieures, **caractérisé en ce que** pour l'enregistrement de la fréquence de $\pi/2$, appelée $f_2$, le rythme du balayage sera réduit à une valeur petite, par exemple 0,25 Hz, au moment où une valeur de la phase préétablie, par exemple 1,2 rad, est atteinte, et que le rythme de balayage sera réduit à une valeur encore plus petite, par exemple 0,1 Hz, au moment où une valeur plus grande de la phase, par exemple 1,4 rad, est atteinte.

39. Procédé selon à l'une des revendications antérieures, **caractérisé en ce que** l'enregistrement du parcours de la fréquence est marqué par la réalisation des pas suivants, effectués dans l'ordre précisé:

- le mesurage du poids statique ;
- l'établissement de la fréquence initiale de 10 Hz par exemple ;
- la réalisation d'une phase de chauffage de l'amortisseur ;
- l'augmentation de l'oscillation excitatrice de la plaque oscillante jusqu'àce qu'elle atteigne la fréquence maximum de 35 Hz, par exemple ;
- la détermination des points d'appui pour l'évaluation paramétrique ;
- la détermination de la fréquence de résonance $f_3$;
- la détermination de la fréquence de $\pi/2$, $f_2$ et ;
- la transmission des dates pour être interprétées.

40. Procédé selon à l'une des revendications antérieures, **caractérisé en ce que** la détermination des points de fréquence est marquée par la réalisation des pas suivants, effectués dans l'ordre précisé:

- l'établissement de la fréquence visée ;
- la vérification du fait que la fréquence se stabilise ;
- l'enregistrement des valeurs mesurées ;
- la séparation du signal dans des degrés d'extension et de compression ;
- filtrage digital, préférablement transformation Fourier, des signaux séparés ;
- estimation de la qualité des signaux ;
- analyse de l'adhérence au sol ;
- vérification du fait que les mesurages sont valables pour un certain numéro de rotations ;
- vérification du fait que les mesurages accomplissent les normes de qualité, au moins pour ce qui est d'une partie des rotations ;
- le calcul de la valeur moyenne pour les mesurages classifiés comme correctes ;
- compensation de l'influence de la plaque oscillante.

41. Procédé selon à l'une des revendications antérieures, **caractérisé en ce que** le traitement des mesurages exige la réalisation des pas suivants, effectués dans l'ordre précisé:

- la vérification du fait que l'adhérence au sol respecte des limites de tolérance données ;
- l'extraction des fréquences caractéristiques ;
- l'évaluation paramétrique par rapport au calcul de $k_R$, la constante élastique du pneu ;
- la vérification de la pression de l'air du pneu ;
- la vérification de la forme du signal du spectre d'amplitudes ;
- la vérification du fait que la phase atteint la valeur de $\pi/2$ ;
- la vérification de la validité de la relation $f_2 = f_3$ ;
- le calcul des paramètres ;
- la vérification de la qualité des paramètres d'être calculables ;
- le calcul du degré d'amortissement axial ;
- le calcul de la caractéristique de l'amortissement limite et ;
- l'interprétation du degré d'amortissement axial et la formulation d'une recommandation quant au besoin de changer l'amortisseur.

42. Dispositif de mise en oeuvre du procédé de vérification des amortisseurs montés sur le véhicule conformément à l'une des revendications antérieures, à l'aide d'une plaque oscillante, sur laquelle le véhicule, plus exactement une roue du véhicule s'appuie et qui peut subir un déplacement vertical et aller-retour avec une amplitude modérée et une fréquence variable et qui transmet à la roue une oscillation, où l'amortissement de l'élément d'amortissement peut être déduit de la réponse dynamique du système de roulage au niveau des oscillations de la plaque oscillante et de la fonction de phase relative entre la force exercée par la plaque oscillante et le mouvement de la plaque oscillante, **caractérisé par** des capteurs de la force de cisaillement au niveau de la plaque oscillante et un émetteur d'impulsions pour le balayage au niveau des angles équidistants et moyennant un dispositif, à l'aide duquel le signal de mesurage est décomposé dans un signal comprenant des degrés de compression et dans un signal comprenant des degrés d'extension et moyennant un dispositif qui permet la transmission séparée du signal comprenant des degrés de compression et du signal comprenant des degrés d'extension vers le dispositif de traitement ultérieur des signaux.

**43.** Dispositif selon la revendication 42, **caractérisé en ce que** le dispositif de traitement apprécie la qualité de l'amortisseur monté sur le véhicule par l'entremise du degré d'amortissement axial par rapport au résultat de la division entre la masse amortie et la masse non amortie, où les valeurs mesurées du degré d'amortissement axial sont corrélées avec une caractéristique d'un degré d'amortissement limite délimitant le domaine des degrés d'amortissement axiales inacceptables.

# FIG 1

Flowchart:

- **Frequenzgang**
- Statisches Gewicht messen
- Auf Startfrequenz 10Hz anfahren
- Erwärmungsphase des Dämpfers
- Auf Maximalfrequenz 35 Hz hochfahren
- Stützpunkte für Parameterschätzung aufnehmen
- Resonanzfrequenz f3 aufnehmen
- Pi/2-Frequenz f2 aufnehmen
- Daten an die Auswertung senden
- **Ende**

**FIG 2**

Frequenzpunkt

Zielfrequenz anfahren

Frequenz stabilisiert ? — Nein → Abbruch- nächste Frequenz

Ja

1 Umdrehung = 256
Meßwerte aufnehmen

Zug-Druckstufen-Trennung

Fourier-Transformation

Güte-Bewertung

Bodenhaftung in Ordnung
? — Nein → Abbruch- Messung beendet

Ja

3
Umdrehungen aufgenommen ? — Nein

Ja

mind.
2 Umdrehungen erfüllen
Gütenorm ? — Nein → Abbruch- nächste Frequenz

Ja

Mittelwertbildung

Schwingplatten-Kompensation

Ende

## FIG 3B

F [N]

Druckstufe

Zugstufe

Frequenztrennung

## FIG 3A

F [N]

π/2    π/2

Druckstufe    Zugstufe

Meßsignal

FIG 4B

FIG 4A

# FIG 5A

Auswertung

Bodenhaftung während Messung in Ordnung ?

— nein → Auswertung beendet-Dämpfer ungenügend !

↓ ja

Extrahiere charakteristische Frequenzen

Parameterschätzung Berrechnung von KR

Luftdruck in Ordnung ?

— nein → Abbruch-Luftdruck korregieren !

Kennlinie des Reifentyps

↓ ja

Signalformtest des Amplitudenspektrums

↓ ja

Signalform in Ordnung ?

— nein → Spurflatern erkannt ?

nein ↑ Auswertung beendet-Dämpferventile defekt !

ja →

↓ ja

Erreicht Phasengang Pi/2 ?

— nein → Auswertung beendet-Dämper sehr gut !

↓ ja

f2 = f3 ?

— ja → Auswertung beendet-Dämpfer ungenügend !

↓ nein

# FIG 5B

nein

Parameterberechnung

Auswertung beendet-
Dämpfer sehr gut !

ja

Bodenhaftung zu groß ?    nein    Parameter berechenbar ?

nein                                    ja

Bodenhaftung
zu klein ?

ja

nein

Berechne
Achs-Dämpfungsgrad

Temperatur

Systemfehler

Berechne
Grenzwertdämpfung

Grenzwert-
Parameter

Auswertung beendet-
Dämpfer ungenügend !

Dämpfer ungenügend !    ungenügend    Achs-
Unbedingt austauschen !                Dämpfungsgrad ?

mittelmäßig                                    sehr gut

Dämpfer im Grenzbereich !            Dämpfer in Ordnung !
Austausch empfohlen !

**FIG 6**

Amplitude von F[N]  Haftreibungsabriß  Phase von F [Rad]

**FIG7**

Amplitude von F[N]  Phase von F [Rad]

## FIG 8

Amplitude von F [N]

Phase

Phase von F [Rad]

14.37Hz

Druckstufe

Amplitude

14.40Hz
Warnung!

Phase

Frequenz [Hz]

6.0k
4.8k
3.6k
2.4k
1.2k

2.4

1.2

4.0    8.0    12.0   16.0

Phase

36.0   40.0

Phase

-1.2k
-2.4k
-3.6k
-4.8k
-6.0k

Amplitude

Zugstufe

-1.2

-2.4

2.54Hz

13.97Hz       14.37Hz
Warnung!

## FIG9

Mercedes 500

kR

Soll-kR

Maximum 3.3 bar

Minimum 2.0 bar

Volvo 940

Porsche Carrera

mS

## FIG10

Federkonstante des Reifens kr [n/mm]

400
300
200
100
0

2,3bar
1,8bar
1,3bar

Uniroyal 155/70 R13

0    100    200    300    400

Vorspannung des Reifens Fs [N]

## FIG11

Amplitude von F [N]

Phase von F [Rad]

5.0k
4.0k
3.0k
2.0k
1.0k
-1.0k
-2.0k
-3.0k
-4.0k
-5.0k

2.4
1.2
-1.2
-2.4

Druckstufe

Amplitude

17.91Hz

19.65Hz

Phase    Frequenz [Hz]

4.0    8.0    12.0    16.0    20.0    40.0

Phase

Amplitude

Zugstufe

17.87Hz    19.31Hz

FIG12

Amplitude von F [N]

Phase von F [Rad]

Druckstufe
18.29Hz
Amplitude
2.4
1.2
Phase
Frequenz [Hz]
Phase
Amplitude
Zugstufe
14.97Hz
18.29Hz

FIG13

Amplitude von F [N]

Phase von F [Rad]

Druckstufe
Amplitude
2.4
kR=363.5 N/mm
1.2
Phase
Frequenz [Hz]
16.45Hz
Phase
Amplitude
Zugstufe
15.60Hz
16.22Hz

44

FIG 14

FIG 15

## FIG16

k [N/m]

f2

f3

kR = 10000

mU [kg]

## FIG17

minimales Masseverhältnis

Dämpfer in Ordnung

Dämpfer defekt : Grenzwertlinie

minimaler Achsdämpfungsgrad

mF /mU

Achs-Dämpfungsgrade verschiedener Druckstufen

**FIG 18**

EP 0 921 387 B1

Achs-Dämpfungsgrade verschiedener Zugstufen

**FIG 19**

EP 0 921 387 B1

FIG 20

Druckabhängigkeit des Achs-Dämpfungsgrades

**FIG 21**

Abhängigkeit des Achs-Dämpfungsgrades von der Beladung

Achs DG

(25.7)
KL

(21.5)
328 100% leer

(13.8)
KL

(10.0)
328 50% leer

mF/mU

Temperaturabhängigkeit des Achs-Dämpfungsgrades

**FIG 22**

EP 0 921 387 B1

Abhängigkeit des Achs-Dämpfungsgrades von der Bereifung

FIG 23

EP 0 921 387 B1

Achs-Dämpfungsgrad bei verändertem mU

FIG 24

EP 0 921 387 B1

# FIG25

Achs-DG

Temperatur niedriger

Luftdruck niedriger

mU höher

Beladung höher

Grenzwertlinie

mF/mU